# EUROPÄISCHE PATENTSCHRIFT

(11) **EP 4 301 500 B1**
(45) Veröffentlichungstag und Bekanntmachung des Hinweises auf die Patenterteilung: **25.06.2025**
(21) Anmeldenummer: 22711200.0
(22) Anmeldetag: 02.03.2022
(51) Int. Cl.: B01F 25/421, A61C 9/00

(54) **MISCHELEMENT FÜR EINEN STATISCHEN MIXER**
MIXING ELEMENT FOR A STATIC MIXER
ÉLÉMENT DE MÉLANGE POUR MÉLANGEUR STATIQUE

(30) Priorität: 05.03.2021 DE 102021105414
(43) Veröffentlichungstag der Anmeldung: 10.01.2024
(73) Patentinhaber: Kulzer GmbH, 63450 Hanau (DE)
(72) Erfinder: KONDZIELA, Mike, 35781 Weilburg (DE)
(74) Vertreter: Bendele, Tanja
(86) Internationale Anmeldenummer: PCT/EP2022/055213
(87) Internationale Veröffentlichungsnummer: WO 2022/184749

(56) Entgegenhaltungen:
- EP-A1- 1 125 626
- DE-A1- 10 158 651
- DE-A1- 102017 117 198
- US-A- 5 851 067

## Beschreibung

Gegenstand der Erfindung ist ein Mischelement für einen statischen Mischer, insbesondere einen dentalen statischen Mischer, zum Mischen niedrig- bis hochviskoser Komponenten, umfassend ein flaches, sich entlang einer Längsachse L erstreckendes Mittelteil mit einer Vorderseite und einer der Vorderseite gegenüberliegenden Rückseite, wobei auf der Vorderseite und/oder auf der Rückseite des Mittelteils mindestens zwei Strömungsbeeinflussungselemente angeordnet sind, welche jeweils mindestens eine im Mittelteil befindliche Durchtrittsöffnung einschließen und die Form von im Wesentlichen senkrecht auf der Vorderseite und/oder der Rückseite stehenden Prismenmänteln, insbesondere auf Basis eines orthodiagonalen Vierecks, aufweisen, welche paarweise an je einer Seitenkante miteinander überlappen oder miteinander verbunden sind. Ferner ist Gegenstand der Erfindung ein statischer Mischer, insbesondere ein dentaler statischer Mischer, umfassend das Mischelement sowie dessen Verwendung zum Mischen von niedrigbis hochviskosen Komponenten.

Mischelemente für statische Mischer sind beispielsweise aus der DE 10 2017 117198 A1 bekannt.

Bei mischtechnischen Vorgängen werden die Bestandteile von mindestens zwei getrennt vorliegenden Mischungskomponenten durch Relativbewegung so umpositioniert, dass ein neues Anordnungsschema in Form eines Gemisches entsteht. Je nach Konsistenz der zu mischenden Komponenten werden dabei statische oder dynamische Mischer eingesetzt. Während in einem dynamischen Mischer rotierende Mischelemente zur Homogenisierung der jeweiligen Komponenten zum Einsatz kommen, werden diese beim statischen Mischen allein durch ihre Strömungsbewegung vermengt. Dies geschieht durch statische Strömungsbeeinflussungselemente im Inneren eines statischen Mischers, welche die jeweiligen Komponenten aufteilen, verwirbeln und wieder zusammenführen.

Derartige Mischer werden unter anderem im Dentalbereich zum Vermischen miteinander reagierender, insbesondere polymerisierender, Komponenten eingesetzt, wie beispielsweise zur Homogenisierung der beiden Pastenbestandteile "Kat" (Katalysatorpaste) und "Base" (Basispaste) bei der manuellen Applikation dentaler Abformmaterialien. Zu diesem Zweck werden die Pastenströme mehrfach zusammengeführt und wieder in Einzelstränge aufgeteilt bis ein homogenes Mischgut entsteht.

Aus dem Stand der Technik sind in erster Linie statische Mischer mit helixförmigen Mischelementen bekannt, bei denen zur Teilung und Zusammenführung der Pastenströme die Helix mehrfach unterbrochen ist. Neuere statische Mischer weisen dagegen längs und quer zur Strömungsrichtung liegende Mischkammern auf, welche untereinander verbunden sind und so durch mehrfache Teilung und Zusammenführung der Pastenströme eine gute Mischleistung gewährleisten.

Beispielsweise offenbart die DE 10 2017 117 198 A1 einen statischen Mischer zum Vermischen pastöser und/oder fließfähiger Komponenten, in welchem diese entlang ihres Strömungsweges hinter- und nebeneinander angerordnete und über Durchgangsöffnungen miteinander in Verbindung stehende, quaderförmige Kammern durchströmen. Die entsprechenden Kammern werden durch sich jeweils quer zur Strömungsrichtung erstreckende Querwände und parallel zur Strömungsrichtung erstreckende Seitenwände definiert und stehen miteinander über in den Seitenwänden vorgesehene Durchtrittsöffnungen in Strömungsverbindung.

Allerdings besteht ein Nachteil der in der DE 102017 117 198 A1 vorgeschlagenen Geometrie in der spritzgießtechnischen Massenfertigung, da die Kerne, die im Spritzgießwerkzeug derartige Hohlräume und Durchbrüche formen können, sehr filigran ausgeführt sein müssen. Diese sehr filigrane Ausführung führt jedoch dazu, dass eine effiziente Kühlung der entsprechenden Werkzeugpartien nicht möglich ist, so dass diese im Spritzgießbetrieb einer hohen thermischen Dauerbelastung (230° bis 300°) ausgesetzt sind. In Folge dessen verliert der zur Herstellung der entsprechenden Werkzeugpartien verwendete hochlegierte Werkzeugstahl langsam seine mechanischen Eigenschaften. Ungünstigenfalls tritt sogar eine Werkzeugbeschädigung durch Wegplatzen der filigranen Werkzeugpartien auf und führt zum Ausfall des Werkzeuges und der Produktion. Der Einsatz hochtemperaturbeständiger Werkzeugstähle kann diesen Effekt verzögern, aber nicht verhindern, so dass die einzige Lösung für dieses Problem derzeit in einer langsameren Prozessführung mit einer verlängerten Kühlphase besteht. Dies gestaltet jedoch den Herstellungsprozess deutlich unwirtschaftlicher und bedingt den Verlust von Produktionskapazität.

Es besteht daher Bedarf, einen statischen Mischer mit einem Mischelement bereitzustellen, das - trotz längs und quer zur Strömungsrichtung angeordneter Mischkammern - den zuvor genannten Nachteil vermeidet.

Der vorliegenden Erfindung liegt daher die Aufgabe zu Grunde, ein Mischelement für einen statischen Mischer bereitzustellen, welches längs und quer zur Strömungsrichtung angeordnete Mischkammern mit einem einfachen Aufbau besitzt. Insbesondere soll ein Mischelement bereitgestellt werden, das wirtschaftlich mittels Spritzgießens herstellbar ist und die Verwendung gut zu temperierender Spritzgießwerkzeuge ermöglicht. Ferner soll das Mischelement eine verbesserte Durchmischung von mindestens zwei niedrig- bis hochviskosen Komponenten, insbesondere Dentalmaterialien, ermöglichen. Darüber hinaus besteht die Aufgabe, ein Mischelement und einen statischen Mischer bereitzustellen, dessen geringe Ausdehnung in Längsrichtung eine unnötige Scherung der zu mischenden Komponenten sowie eine Einschränkung des Sichtfeldes bei der Applikation im Mundraum eines Patienten vermeidet.

Die Aufgaben der vorliegenden Erfindung werden gelöst durch ein Mischelement nach Anspruch 1 und einen, das Mischelement umfassenden, statischen Mischer nach Anspruch 12, sowie durch die Verwendung des statischen Mischers nach Anspruch 14. Bevorzugte Ausführungsformen der Erfindung sind in den Unteransprüchen sowie in der Beschreibung detailliert offenbart.

Erfindungsgemäß werden die Aufgaben der vorliegenden Erfindung dadurch gelöst, dass die Strömungsbeeinflussungselemente des erfindungsgemäßen Mischelements die Form von im Wesentlichen senkrecht auf der Vorderseite und/oder der Rückseite des Mischelements stehenden Prismenmänteln, insbesondere Prismenmänteln auf Basis eines orthodiagonalen Vierecks, bevorzugt auf Basis eines Drachenvierecks, besonders bevorzugt einer Raute, aufweisen, welche paarweise an je einer Seitenkante miteinander überlappen oder miteinander verbunden sind. Als im Wesentlichen senkrecht auf der Vorderseite und/oder der Rückseite des Mischelements stehend werden dabei im Rahmen der vorliegenden Erfindung solche Prismenmäntel angesehen, deren Positionierung auf der Vorderseite bzw. Rückseite nicht oder nur geringfügig von einem 90°-Winkel abweicht. Dies ist der Fall, wenn zumindest deren Seitenflächen im Wesentlichen senkrecht auf der Vorderseite bzw. Rückseite stehen. Die Seitenflächen der Prismenmäntel weisen daher vorzugsweise mit der Vorderseite und/oder Rückseite des Mischelements einen 90°-Winkel plus/minus 5°, bevorzugt plus/minus 3°, besonders bevorzugt plus/minus 0,5°, auf. Insbesondere weisen die Strömungsbeeinflussungselemente des erfindungsgemäßen Mischelements die Form von in einem 90°-Winkel plus/minus 5°, bevorzugt plus/minus 3°, besonders bevorzugt plus/minus 0,5°, auf der Vorderseite und/oder der Rückseite des Mischelements stehenden Prismenmänteln auf, welche paarweise an je einer Seitenkante miteinander überlappen oder miteinander verbunden sind.

Die Strömungsbeeinflussungselemente bilden somit, insbesondere gemeinsam mit den Innenwandungen einer Mischerhülse eines statischen Mischers, geometrische, vorzugsweise rautenförmige, Mischkammern aus, die in Bezug auf den Strömungsweg der zu vermischenden Komponenten hintereinander angeordnet und zu ihren jeweiligen Übergängen ineinander hin verjüngt sind.

Die Wahl einer solchen Mischkammergeometrie hat den Vorteil, dass die zu mischenden Komponentenströme an den als Engstellen ausgebildeten Übergängen der Mischkammern ineinander zwangsläufig gestaut werden. Der so in den jeweiligen Mischkammern gebildete Rückstau bedingt eine Aufteilung des entsprechenden Komponentenstroms, da ein Teilstrom durch eine im Bereich der Engstelle angeordnete Öffnung in der Vorderseite bzw. Rückseite des Mischelements zum parallelen Komponentenstrom geleitet und mit diesem verwirbelt wird, während der andere Teilstrom seinen Strömungsweg fortsetzt. Durch Wiederholung dieses Vorgangs in jeder der Mischkammern des erfindungsgemäßen Mischelements wird somit eine optimale Durchmischung des entsprechenden Materials, insbesondere Dentalmaterials, erreicht. Darüber hinaus ermöglicht das erfindungsgemäße Mischelement aufgrund seines einfachen Aufbaus eine äußerst wirtschaftliche Herstellung mittels Spritzgießens. Dabei können die erforderlichen Spritzgießwerkzeuge ausreichend temperiert werden, so dass das Risiko einer Werkzeugbeschädigung und eines Produktionsausfalls deutlich verringert ist.

Im Rahmen der vorliegenden Erfindung wird unter einem Prismenmantel im Allgemeinen der Mantel eines dreidimensionalen Körpers, das heißt ohne Grundfläche und Deckfläche, verstanden. Dieser kann, ähnlich wie bei einem Rotationskörper, aus einer durchgehenden gekrümmten Fläche bestehen oder, ähnlich wie bei einem Prisma, aus mehren, insbesondere polygonalen, Flächen zusammengesetzt sein. Vorzugsweise besteht ein erfindungsgemäßer Prismenmantel aus mindestens drei, insbesondere mindestens vier, polygonalen Flächen, welche jeweils paarweise durch Aufeinandertreffen die Seitenkanten des Prismenmantels ausbilden. In diesem Sinne besitzt ein bevorzugter Prismenmantel mindestens drei, insbesondere mindestens vier, optional abgerundete, Seitenkanten. Diese können, müssen aber nicht, zur gedachten Grundfläche und/oder zur gedachten Deckfläche senkrecht angeordnet sein. Als erfindungsgemäß wird daher auch ein Prismenmantel angesehen, bei dem die gedachte Grundfläche und die gedachte Deckfläche hinsichtlich ihrer Form und/oder Größe nicht übereinstimmen und bei dem die gedachte Deckfläche zur gedachten Grundfläche horizontal verschoben ist. Ferner muss die gedachte Deckfläche zur gedachten Grundfläche nicht notwendigerweise parallel sein.

Die Basis der erfindungsgemäßen Prismenmäntel bildet jeweils die gedachte Grundfläche, welche vorzugsweise die Form eines orthodiagonalen Vierecks, insbesondere eines orthodiagonalen Vierecks mit abgerundeten Ecken, aufweist. Unter einem orthodiagonalen Viereck wird ein Viereck verstanden, in dem sich die Diagonalen rechtwinklig kreuzen, oder anders gesagt, ein Viereck, bei dem für die beiden Paare gegenüberliegender Seiten die Summen der Quadrate der Seitenlängen übereinstimmen.

Besonders bevorzugte orthodiagonale Vierecke als Basis der erfindungsgemäßen Prismenmäntel sind Drachenvierecke, insbesondere mit abgerundeten Ecken, vorzugsweise Rauten, insbesondere mit abgerundeten Ecken. Ein Drachenviereck (auch Deltoid) ist ein ebenes Viereck, bei dem eine Diagonale die Symmetrieachse ist bzw. das zwei Paare gleich langer benachbarter Seiten besitzt. Ein spezielles Drachenviereck ist die Raute (Rhombus), nämlich ein gleichseitiges Deltoid. Folglich handelt es sich bei einer Raute um ein ebenes Viereck mit vier gleichlangen Seiten, bei dem gegenüberliegende Seiten parallel und gegenüberliegende Winkel gleich groß sind.

Die jeweiligen, die erfindungsgemäßen Prismenmäntel bildenden, Seitenflächen können eine polygonale Form, das heißt die Form eines Polygons aufweisen. Erfindungsgemäß bevorzugte Polygonale umfassen konvexe Polygone, insbesondere konvexe Vierecke. Vorzugsweise sind die Seitenflächen der erfindungsgemäßen Prismenmäntel in Form von Trapezen, das heißt als Vierecke mit zwei parallel zueinander liegenden Seiten, ausgebildet. Je nachdem, ob bei den entsprechenden Prismenmänteln die gedachte Grundfläche und die gedachte Deckfläche zueinander parallel und/oder verschoben und/oder kongruent sind, können die jeweiligen Seitenflächen unterschiedliche Ausprägungen von konvexen Vierecken, insbesondere Trapezen, aufweisen. So handelt es sich bei den Seitenflächen der erfindungsgemäßen Prismenmäntel vorzugsweise um Rechtecke, wenn die gedachte Grundfläche und die gedachte Deckfläche zueinander kongruent, parallel und nicht verschoben sind und um Parallelogramme, wenn die gedachte Grundfläche und die gedachte Deckfläche zwar zueinander kongruent und parallel, aber in horizontaler Richtung verschoben sind. Ansonsten, das heißt, wenn die gedachte Grundfläche und die gedachte Deckfläche zueinander nicht kongruent und/oder nicht parallel sind, handelt es sich um Trapeze. Die Seitenflächen der erfindungsgemäßen Prismenmäntel können sowohl planar als auch gewölbt sein.

Somit ist Gegenstand der Erfindung ein Mischelement für einen statischen Mischer, insbesondere einen dentalen statischen Mischer, zum Mischen niedrig- bis hochviskoser Komponenten, umfassend ein flaches, sich entlang einer Längsachse L erstreckendes Mittelteil mit einer Vorderseite und einer der Vorderseite gegenüberliegenden Rückseite, wobei auf der Vorderseite und/oder auf der Rückseite des Mittelteils mindestens zwei Strömungsbeeinflussungselemente, insbesondere mindestens zwei bis 20, vorzugsweise mindestens drei bis zehn, wie 4, 5, 6, 7, 8, 9, Strömungsbeeinflussungselemente, angeordnet sind, welche jeweils mindestens eine, insbesondere mindestens zwei, im Mittelteil befindliche Durchtrittsöffnung(en) einschließen, und wobei die Strömungsbeeinflussungselemente die Form von im Wesentlichen senkrecht auf der Vorderseite und/oder der Rückseite stehenden Prismenmänteln, insbesondere auf Basis eines orthodiagonalen Vierecks, vorzugsweise auf Basis eine Raute, aufweisen, welche paarweise an je einer Seitenkante miteinander überlappen oder miteinander verbunden sind.

Das Mittelteil des erfindungsgemäßen Mischelements stellt eine Trennwand zwischen den auf der Vorderseite des Mischelements befindlichen Strömungsbeeinflussungselementen und den auf der Rückseite des Mischelements befindlichen Strömungsbeeinflussungselementen dar und trennt damit den auf der Vorderseite von dem auf der Rückseite entlang strömenden Komponentenstrom. Vorzugsweise weist das Mittelteil eine Höhe von größer gleich 10 mm bis kleiner gleich 100 mm, bevorzugt größer gleich 40 mm bis kleiner gleich 70 mm, besonders bevorzugt größer gleich 50 mm bis kleiner gleich 60 mm, gemessen entlang der Längsachse L, und/oder eine Breite von größer gleich 2 mm bis kleiner gleich 10 mm, bevorzugt größer gleich 4 mm bis kleiner gleich 6 mm, besonders bevorzugt um 5 mm, gemessen senkrecht zur Längsachse L, auf. Dabei beträgt die Dicke des Mittelteils vorzugsweise größer gleich 1 mm bis kleiner gleich 10 mm, vorzugsweise größer gleich 4 mm bis kleiner gleich 6 mm.

Das erfindungsgemäße Mittelteil weist mehrere Durchtrittsöffnungen auf, durch welche die auf der Vorderseite und der Rückseite des Mittelteils getrennt voneinander entlang strömenden Komponentenströme zumindest teilweise auf die jeweils andere Seite des Mittelteils gelangen und sich dort vermischen können. Dementsprechend weist das Mittelteil insgesamt mindestens zwei, vorzugsweise mindestens zwei bis 50, insbesondere mindestens fünf bis 40, Durchtrittsöffnungen auf, um die Vorderseite des Mittelteils mit der Rückseite des Mittelteils zu verbinden (und umgekehrt). Die mindestens zwei Durchtrittsöffnungen können im Querschnitt jede beliebige zweidimensionale Form aufweisen wie, jeweils unabhängig voneinander, Kreis, Ellipse, Rechteckt, Quadrat und/oder Dreieck. Dabei beträgt der Flächeninhalt des Querschnitts der mindestens zwei Durchtrittsöffnungen vorzugsweise, jeweils unabhängig voneinander, größer gleich 0,1 mm² bis kleiner gleich 3,0 mm², bevorzugt größer gleich 0,5 mm² bis kleiner gleich 2,5 mm², besonders bevorzugt 1,0 ± 0,25 mm², insbesondere 0,78 mm². Zudem kann es bevorzugt sein, wenn der Flächeninhalt des Querschnitts einer Durchtrittsöffnung auf der Vorderseite des Mittelteils vom Flächeninhalt des Querschnitts einer Durchtrittsöffnung auf der Rückseite des Mittelteils abweicht, beispielsweise um zwar den einen Komponentenstrom von der Vorderseite auf die Rückseite gelangen zu lassen, aber nicht den anderen Komponentenstrom von der Rückseite auf die Vorderseite (und umgekehrt). Die Anordnung der Durchtrittsöffnungen hängt von den auf der Vorderseite und/oder Rückseite des Mittelteils angeordneten Strömungsbeeinflussungselementen ab.

So schließen die mindestens zwei auf der Vorderseite und/oder auf der Rückseite des Mittelteils angeordneten Strömungsbeeinflussungselemente jeweils mindestens eine, insbesondere mindestens zwei, Durchtrittsöffnungen ein, das heißt diese befinden sich innerhalb und damit in der gedachten Grundfläche des jeweiligen Prismenmantels, wobei sie vorzugsweise näher zu den jeweiligen paarweise miteinander überlappenden bzw. verbundenen Seitenkanten als zur Mitte des jeweiligen Strömungsbeeinflussungselement orientiert sind. Vorzugsweise befinden sich keine Durchtrittsöffnungen außerhalb der von den Strömungsbeeinflussungselementen eingeschlossenen Bereiche. Somit ist gewährleistet, dass ein in einer, durch ein Strömungsbeeinflussungselement gebildeten, Mischkammer befindlicher Komponentenstrom wieder in einer, durch ein Strömungsbeeinflussungselement gebildeten, Mischkammer, jedoch auf der anderen Seite des Mittelteils, herauskommt.

Erfindungsgemäß sind die Strömungsbeeinflussungselemente in Form von im Wesentlichen senkrecht auf der Vorderseite und/oder der Rückseite, insbesondere in einem 90°-Winkel plus/minus 5°, bevorzugt plus/minus 3°, besonders bevorzugt plus/minus 0.5°, stehenden Prismenmänteln, insbesondere auf Basis eines orthodiagonalen Vierecks, ausgebildet. Im Rahmen der zuvor genannten Definition eines erfindungsgemäßen Prismenmantels wird dieser als im Wesentlichen senkrecht auf der Vorderseite und/oder der Rückseite stehend angesehen, wenn zumindest dessen Seitenflächen im Wesentlichen senkrecht auf der Vorderseite und/oder der Rückseite stehen. Dies muss nicht notwendigerweise auch für die Seitenkanten des Prismenmantels gelten. In diesem Sinne wird die gedachte Grundfläche der Prismenmäntel jeweils durch einen Teil der Vorderseite bzw. Rückseite des Mittelteils dargestellt. Die gedachte Deckfläche hingegen wird erst bei Aufnahme des erfindungsgemäßen Mischelements in die Mischerhülse eines statischen Mischers dargestellt, und zwar durch die Innenwandungen der Mischerhülse.

Bevorzugte Strömungsbeeinflussungselemente weisen die Form eines Prismenmantels auf Basis eines Drachenvierecks, insbesondere auf Basis einer Raute, vorzugsweise einer gestreckten Raute, auf. Dabei ist es erfindungsgemäß besonders bevorzugt, wenn in einer ersten Ausführungsform des erfindungsgemäßen Mischelements die Strömungsbeeinflussungselemente die Form von Prismenmänteln auf Basis einer Raute, insbesondere gestreckten Raute, aufweisen, bei denen die gedachte Grundfläche und die gedachte Deckfläche rautenförmig kongruent, parallel und nicht verschoben sind, während in einer zweiten Ausführungsform des erfindungsgemäßen Mischelements die Strömungsbeeinflussungselemente die Form von Prismenmänteln auf Basis einer Raute, insbesondere gestreckten Raute, aufweisen, bei denen die gedachte Grundfläche und die gedachte Deckfläche zwar beide rautenförmig sind, jedoch die gedachte Deckfläche zur gedachten Grundfläche weder kongruent noch parallel ist. Dennoch werden erfindungsgemäß in beiden Fällen auch die durch die jeweiligen Strömungsbeeinflussungselemente gebildeten Mischkammern als rautenförmig bezeichnet.

Die erfindungsgemäß bevorzugten Strömungsbeeinflussungselemente, insbesondere die als Basis dienenden Prismenmäntel, weisen somit vorzugsweise jeweils vier, optional abgerundete, Seitenkanten auf, wobei sie paarweise an je einer dieser Seitenkanten miteinander überlappen oder miteinander verbunden sind. Insbesondere treffen erfindungsgemäß bevorzugte Strömungsbeeinflussungselemente an zwei ihrer Seitenkanten, insbesondere an zwei gegenüberliegenden Seitenkanten, mit je einem anderen erfindungsgemäß bevorzugten Strömungsbeeinflussungselement aufeinander. In diesem Zusammenhang bezieht sich der Begriff "paarweise" auf den Umstand, dass je zwei Strömungsbeeinflussungselemente an mindestens einer gemeinsamen Seitenkante aufeinandertreffen. Bei drei Strömungsbeeinflussungselementen würden somit das erste und zweite Strömungsbeeinflussungselement, wie auch das zweite und dritte Strömungsbeeinflussungselement und optional auch das erste und dritte Strömungsbeeinflussungselement an mindestens einer gemeinsamen Seitenkante aufeinandertreffen. Folglich verlangt der Begriff "paarweise" nicht notwendigerweise das Vorliegenden einer geraden Anzahl von Strömungsbeeinflussungselementen.

Unter "miteinander überlappenden Seitenkanten" wird erfindungsgemäß verstanden, dass die betreffenden Prismenmäntel zumindest teilweise ineinandergeschoben sind und keine gemeinsame Seitenkante ausbilden. Dagegen ist unter "miteinander verbundenen Seitenkanten" die Ausbildung einer gemeinsamen Seitenkante zu verstehen.

In einer bevorzugten Ausführungsform der vorliegenden Erfindung weisen die Strömungsbeeinflussungselemente an ihren paarweise miteinander überlappenden oder miteinander verbundenen Seitenkanten jeweils einen gemeinsamen Durchlass auf. Dieser ermöglicht das Strömen des auf der Vorderseite bzw. Rückseite befindlichen Komponentenstroms in das in Strömungsrichtung nachfolgende Strömungsbeeinflussungselement. Insbesondere wird der gemeinsame Durchlass durch das gedachte Ineinanderschieben der betreffenden Strömungsbeeinflussungselemente unter Wegdenken der jeweils überstehenden Spitzen oder aber in der gemeinsamen Seitenkante der betreffenden Strömungsbeeinflussungselemente ausgebildet. Der gemeinsame Durchlass weist vorzugsweise einen Flächeninhalt von größer gleich 0,1 mm² bis kleiner gleich 2,5 mm², bevorzugt größer gleich 0,5 mm² bis kleiner gleich 2,0 mm², besonders bevorzugt 1,0 ± 0,3 mm², insbesondere 1,26 mm², auf.

In einer besonders bevorzugten Ausführungsform der vorliegenden Erfindung sind die paarweise miteinander überlappenden oder miteinander verbundenen Seitenkanten der mindestens zwei Strömungsbeeinflussungselemente auf der Längsmittelachse L_{M} des Mittelteils angeordnet. Die Längsmittelachse L_{M} kann einer Symmetrieachse des Mittelteils entsprechen. In diesem Sinne sind die mindestens zwei Strömungsbeeinflussungselemente derart auf der Vorderseite und/oder auf der Rückseite des Mittelteils angeordnet, dass ihre jeweils gegenüberliegenden Seitenkanten, insbesondere ihre paarweise überlappenden oder miteinander verbundenen Seitenkanten, auf einer gemeinsamen Achse, insbesondere der Längsmittelachse L_{M} des Mittelteils, liegen. Gleichzeitig können, aber nicht müssen, die verbleibenden gegenüberliegenden Seitenkanten jeweils auf einer gemeinsamen Achse liegen, die mit den Längskanten des Mittelteils übereinstimmen.

Die erfindungsgemäßen Strömungsbeeinflussungselemente sind somit in einer Reihe und vorzugsweise in Bezug auf die Strömungsrichtung der zu mischenden Komponenten hintereinander angeordnet. Dementsprechend kommt es in Strömungsrichtung immer wieder zu einer Verjüngung und erneuten Ausdehnung der durch die Strömungsbeeinflussungselemente gebildeten Mischkammern, was den beschriebenen Staueffekt bewirkt.

Das erfindungsgemäße Mischelement ist daher zum Mischen niedrig- bis hochviskoser Komponenten, insbesondere pastöser Materialien, vorzugsweise Dentalmaterialien, optimal geeignet. Die Viskosität bezeichnet die Zähflüssigkeit von Fluiden und wird in Pascalsekunden (Pa·s) angegeben. Dabei erfolgt die Einteilung in drei Kategorien: niedrig-, mittel- und hochviskos. Die Grenzen zwischen den einzelnen Kategorien liegen bei etwa 300 mPa·s für den Übergang zwischen niedrig- und mittelviskosen Fluiden und bei etwa 8000 mPa·s für den Übergang zwischen mittel- und hochviskosen Fluiden. Zu den hochviskosen Fluiden zählen insbesondere auch pastöse Dentalmaterialien, vorzugsweise 2-komponentige (2K-) Abformmaterialien, welche in Form einer Basispaste und einer Katalysatorpaste vorliegen, welche vor ihrer Verwendung durch das erfindungsgemäße Mischelement, bzw. den erfindungsgemäßen statischen Mischer homogen vermischt werden müssen.

In einer ersten Ausführungsform des erfindungsgemäßen Mischelements umfasst das Mittelteil mindestens zwei, insbesondere mindestens zwei bis 20, vorzugsweise mindestens drei bis zehn, auf der Vorderseite angeordnete Strömungsbeeinflussungselemente und mindestens zwei, insbesondere mindestens zwei bis 20, insbesondere mindestens drei bis zehn, auf der Rückseite angeordnete Strömungsbeeinflussungselemente, welche zumindest teilweise in Richtung der Längsachse L zueinander versetzt sind. Insbesondere sind die Strömungsbeeinflussungselemente auf der Vorderseite des Mittelteils zu den auf der Rückseite des Mittelteils angeordneten Strömungsbeeinflussungselementen in Bezug auf die Längsachse L um die Länge mindestens eines Viertels eines Strömungsbeeinflussungselements, vorzugsweise mindestens eines Drittels eines Strömungsbeeinflussungselements, versetzt (und umgekehrt).

Besonders bevorzugt sind die Strömungsbeeinflussungselemente auf der Vorderseite und/oder der Rückseite des Mittelteils in Richtung der Längsachse L um ein halbes Strömungsbeeinflussungselement zueinander versetzt. Das heißt, dass die paarweise miteinander überlappenden oder miteinander verbundenen Seitenkanten der Strömungsbeeinflussungselemente auf der einen Seite des Mittelteils vorzugsweise in Höhe des jeweiligen geometrischen Schwerpunkts, insbesondere Mittelpunkts, der Strömungsbeeinflussungselemente auf der anderen Seite des Mittelteils angeordnet sind (und umgekehrt). Insbesondere sind die paarweise miteinander überlappenden oder miteinander verbundenen Seitenkanten der rautenförmigen Strömungsbeeinflussungselemente auf der Vorderseite des Mittelteils in Höhe des jeweiligen Mittelpunkts der rautenförmigen Strömungsbeeinflussungselemente auf der Rückseite des Mittelteils und/oder die paarweise miteinander überlappenden oder miteinander verbundenen Seitenkanten der rautenförmigen Strömungsbeeinflussungselemente auf der Rückseite des Mittelteils in Höhe des jeweiligen Mittelpunkts der rautenförmigen Strömungsbeeinflussungselemente auf der Vorderseite des Mittelteils angeordnet.

In diesem Zusammenhang kann es bevorzugt sein, wenn die mindestens zwei auf der Vorderseite angeordneten Strömungsbeeinflussungselemente und die mindestens zwei auf der Rückseite angeordneten Strömungsbeeinflussungselemente jeweils mindestens zwei im Mittelteil befindliche Durchtrittsöffnungen einschließen, wobei die eine Durchtrittsöffnung im Bereich, insbesondere an der Engstelle, der paarweise miteinander überlappenden oder miteinander verbundenen Seitenkanten der Strömungsbeeinflussungselemente auf der Vorderseite und die andere Durchtrittsöffnung im Bereich, insbesondere an der Engstelle, der paarweise miteinander überlappenden oder miteinander verbundenen Seitenkanten der Strömungsbeeinflussungselemente auf der Rückseite angeordnet ist.

In Bezug auf den Strömungsweg der zu mischenden Komponenten befinden sich die Durchtrittsöffnungen somit vorzugsweise jeweils am Ende einer durch das entsprechende Strömungsbeeinflussungselement auf der Vorderseite und/oder der Rückseite gebildeten Mischkammer, insbesondere vor dem Übergang in die in Strömungsrichtung nachfolgende Mischkammer. Diese Anordnung ermöglicht eine effizientere Aufteilung der Komponentenströme, da aufgrund des an den Übergängen der Mischkammern ineinander entstehenden Rückstaus jeweils ein Teilstrom des entsprechenden Komponentenstroms in die dort befindliche Durchtrittsöffnung eintritt, aber auf der gegenüberliegenden Seite in einem entspannteren (weniger engen) Bereich der entsprechend versetzt angeordneten Mischkammer, nämlich im Bereich des geometrischen Schwerpunkts, insbesondere Mittelpunkts, des gegenüberliegenden Strömungsbeeinflussungselement aus der Durchtrittsöffnung austritt.

In einer zweiten Ausführungsform des erfindungsgemäßen Mischelements ist das Mittelteil aus mindestens zwei Mittelteilsegmenten, insbesondere mindestens zwei bis 20, vorzugsweise mindestens drei bis zehn, wie 4, 5, 6, 7, 8, 9, Mittelteilsegmenten, zusammengesetzt, welche alternierend in einem Winkel α nach hinten und in einem Winkel β nach vorne in Bezug auf die Längsachse L geneigt sind, wobei vorzugsweise je ein Strömungsbeeinflussungselement auf der Vorderseite und/oder auf der Rückseite, insbesondere je ein Strömungsbeeinflussungselement auf der Vorderseite und je ein Strömungsbeeinflussungselement auf der Rückseite, je eines Mittelteilsegments angeordnet ist.

In diesem Sinne beschreibt das aus Mittelteilsegmenten zusammengesetzte Mittelteil im Profil bzw. dessen Querschnitt entlang der Längsachse L eine Zick-Zack-Linie, bei der die Mittelteilsegmente jeweils in einem Winkel (α - β) größer gleich 2° bis kleiner gleich 178°, bevorzugt größer gleich 20° bis kleiner gleich 160°, besonders bevorzugt größer gleich 60° bis kleiner gleich 120°, gegeneinander geneigt sind. Folglich treffen die einzelnen Mittelteilsegmente mit Blick auf die Vorderseite und/oder Rückseite alternierend in einer nach vorne kommenden Spitze oder unter Ausbildung eines nach hinten reichenden spitzen Hohlraums und je zwei Strömungsbeeinflussungselemente auf der Vorderseite bzw. auf der Rückseite somit entweder an einer nach vorne kommenden Spitze zweier Mittelteilsegmenten und damit stumpf oder am Ende eines von zwei Mittelteilsegmenten ausgebildeten spitzen Hohlraums und damit spitz aufeinander. Die jeweiligen miteinander überlappenden oder miteinander verbundenen Seitenkanten der benachbarten Strömungsbeeinflussungselemente liegen in beiden Fällen vorzugsweise auf der Winkelhalbierenden des von den entsprechenden Mittelteilsegmenten eingeschlossenen Winkels.

Die mindestens zwei bis 20 Mittelteilsegmente sind jeweils paarweise miteinander verbunden, insbesondere materialeinstückig ausgebildet, und ergeben in ihrer Gesamtheit das Mittelteil des erfindungsgemäßen Mischelements. Das Mittelteil erstreckt sich somit weiterhin entlang der Längsachse L, ist aber in dieser zweiten Ausführungsform im Gegensatz zur ersten Ausführungsform des erfindungsgemäßen Mischelements nicht planar ausgestaltet. Stattdessen besteht das Mittelteil aus alternierend in einem Winkel α nach hinten und in einem Winkel β nach vorne in Bezug auf die Längsachse L geneigten Mittelteilsegmenten. Dabei kann es bevorzugt sein, wenn, unabhängig voneinander, der Winkel α größer gleich 1° bis kleiner gleich 89°, bevorzugt größer gleich 25° bis kleiner gleich 85°, besonders bevorzugt größer gleich 50° bis kleiner gleich 80°, insbesondere 75°, vorzugweise mit +/- 2°, bevorzugt mit +/- 1 °, und/oder der Winkel β kleiner gleich -1° bis größer gleich -89°, bevorzugt kleiner gleich -25° bis größer gleich -85°, besonders bevorzugt kleiner gleich -50° bis größer gleich - 80°, insbesondere 75°, vorzugweise +/- 2°, bevorzugt mit +/- 1 °, in Bezug auf die Längsachse L beträgt. Insbesondere ist der Betrag des Winkel α gleich dem Betrag des Winkels β.

Dieser besondere Verlauf des Mittelteils hat den Vorteil, dass jede zweite von den Strömungsbeeinflussungselementen gebildete Mischkammer sich an ihrem Übergang in die nachfolgende Mischkammer nicht nur in Bezug auf ihre Breite, sondern auch in Bezug auf ihre Tiefe verjüngt. Durch diese horizontale und vertikale Verringerung ihrer Querschnittsfläche in axialer Strömungsrichtung steigt der Fließwiderstand eines entsprechenden Komponentenstroms derart an, dass ein Teilstrom des Komponentenstroms durch die im Bereich des Übergangs zur nachfolgenden Mischkammer angeordnete Durchtrittsöffnung im Mittelteil in die gegenüberliegende Mischkammer auf der anderen Seite des Mittelteils gelangt und sich mit dem dort befindlichen Komponentenstrom vermischt. Die verbleibenden Mischkammern hingegen, in welchen entgegengesetzt statt einer Verjüngung eine Ausdehnung in Bezug auf ihre Tiefe stattfindet, ermöglichen eine ausgiebige Vermischung gerade zusammengeführter Komponentenströme. Dieser Effekt kann weiter verstärkt werden, indem die gemeinsamen Durchlässe an den paarweise miteinander überlappenden oder miteinander verbundenen Seitenkanten der Strömungsbeeinflussungselemente, je nachdem, ob es sich um eine sich in Bezug auf die Tiefe verjüngende oder ausdehnende Mischkammer handelt, unterschiedlich groß ausgestaltet sind.

Somit kann ein Mischelement der zweiten Ausführungsform erfindungsgemäß besonders bevorzugt sein, bei dem die Strömungsbeeinflussungselemente auf der Vorderseite und/oder Rückseite benachbarter Mittelteilsegmente an ihren paarweise miteinander überlappenden oder miteinander verbundenen Seitenkanten alternierend stumpf oder spitz aufeinandertreffen und der gemeinsame Durchlass an den paarweise miteinander überlappenden oder miteinander verbundenen Seitenkanten von zwei spitz aufeinandertreffenden Strömungsbeeinflussungselementen größer ist als der gemeinsame Durchlass an den paarweise miteinander überlappenden oder miteinander verbundenen Seitenkanten von zwei stumpf aufeinandertreffenden Strömungsbeeinflussungselementen. Insbesondere ist der gemeinsame Durchlass an den paarweise miteinander überlappenden oder miteinander verbundenen Seitenkanten von zwei spitz aufeinandertreffenden Strömungsbeeinflussungselementen mindestens 1,25-mal, vorzugsweise mindestens 1,5-mal, insbesondere mindestens doppelt so groß, wie der gemeinsame Durchlass an den paarweise miteinander überlappenden Seitenkanten von zwei stumpf aufeinandertreffenden Strömungsbeeinflussungselementen. Der kleinere gemeinsame Durchlass bei zwei stumpf aufeinandertreffenden Strömungsbeeinflussungselementen erhöht den Fließwiderstand des jeweiligen Komponentenstroms in den sich in Bezug auf die Tiefe verjüngenden Mischkammern, während gleichzeitig in den sich in Bezug auf die Tiefe ausdehnenden Mischkammern durch den größeren gemeinsamen Durchlass von zwei spitz aufeinandertreffenden Strömungsbeeinflussungselementen ein leichteres Vermischen und Vorwärtsströmen der gerade zusammengeführten Komponentenströme stattfinden kann.

Darüber hinaus ist vorzugsweise auf der Vorderseite und/oder auf der Rückseite zwischen zwei Mittelteilsegmenten je ein im Wesentlichen senkrecht zur Längsachse L ausgerichteter Quersteg angeordnet, um die jeweiligen Übergänge von den einzelnen Mischkammern ineinander zu stabilisieren. Insbesondere weist der Quersteg in Bezug auf die Längsachse L dieselbe Breite wie das Mittelteil auf. So liegen vorzugsweise die nicht paarweise miteinander überlappenden oder miteinander verbundenen Seitenkanten der Strömungsbeeinflussungselemente auf einer gemeinsamen Linie mit der jeweiligen Endkante des Querstegs. Vorzugsweise ist der Quersteg mit dem Mittelteil bzw. den zugehörigen Mittelteilsegmenten gefügt verbunden oder integral ausgebildet. Der Quersteg kann auch durch die Verbindung zweier Mittelteilsegmente zustande kommen.

In einer weiter bevorzugten Ausführungsform der vorliegenden Erfindung, welche sowohl mit der ersten Ausführungsform als auch mit der zweiten Ausführungsform des erfindungsgemäßen Mischelements kompatibel ist, umfasst das Mischelement ferner ein erstes Seitenteil sowie ein zum ersten Seitenteil beabstandet angeordnetes zweites Seitenteil, wobei das Mittelteil so mit dem ersten Seitenteil und dem zweiten Seitenteil verbunden ist, dass die Vorderseite und die Rückseite im Wesentlichen senkrecht zum ersten Seitenteil und/oder zum zweiten Seitenteil ausgerichtet sind. In diesem Sinne bildet das Mittelteil gemeinsam mit dem ersten Seitenteil (linkes Seitenteil) und dem zweiten Seitenteil (rechtes Seitenteil) von oben oder von unten betrachtet im Wesentlichen die Form des Buchstabens H aus. Das rechte und/oder linke Seitenteil kann mit dem Mittelteil bzw. den Mittelteilsegmenten gefügt verbunden oder integral ausgebildet sein und erleichtert die Aufnahme des erfindungsgemäßen Mischelements in die Mischerhülse eines statischen Mischers. Insbesondere sind das rechte und linke Seitenteil dazu vorgesehen, an zwei gegenüberliegenden Innenwandungen der Mischerhülse eines erfindungsgemäßen statischen Mischers anzuliegen. In diesem Sinne ist bevorzugt, wenn der vom linken und rechten Seitenteil definierte Querschnitt des Mischelements mit dem von den Innenwandungen der Mischerhülse eines erfindungsgemäßen statischen Mischers ausgebildete Querschnitt übereinstimmt. Das heißt, dass vorzugsweise die Längskanten des linken und/oder rechten Seitenteils mit den Oberkanten der jeweiligen Strömungsbeeinflussungselemente auf der Vorderseite und/oder Rückseite des Mittelteils in einer Ebene liegen.

Zudem kann es erfindungsgemäß bevorzugt sein, wenn das Mischelement ferner ein Bodenteil mit mindestens einer Eintrittsöffnung, insbesondere mit mindestens zwei Eintrittsöffnungen, umfasst, welches im Wesentlichen senkrecht zum Mittelteil und/oder zum ersten Seitenteil sowie zum zweiten Seitenteil ausgerichtet ist. Das Bodenteil kann in Form einer Scheibe oder eines Rechteckts, insbesondere Quadrats, ausgebildet sein und verhindert, dass die zu mischenden Komponenten außerhalb der durch die Strömungsbeeinflussungselemente gebildeten Mischkammern auf der Vorderseite und/oder Rückseite des Mittelteils eingebracht werden. Insbesondere kann das Bodenteil auch in Form eines Mischerdeckels ausgebildet sein, welcher zum Verschluss einer Mischerhülse eines statischen Mischers vorgesehen ist.

In einer besonders bevorzugten Ausführungsform der vorliegenden Erfindung ist das Mischelement, insbesondere das Mittelteil mit den Strömungsbeeinflussungselementen und optional das erste und/oder zweite Seitenteil und/oder das Bodenteil, ein Spritzgussteil. Alternativ wird das Mischelement, insbesondere das Mittelteil mit den Strömungsbeeinflussungselementen und optional das erste und/oder zweite Seitenteil und/oder das Bodenteil in einem generativen, Material-aufbauenden Verfahren hergestellt. Dabei sind das Mittelteil mit den Strömungsbeeinflussungselementen und optional das erste und/oder zweite Seitenteil und/oder das Bodenteil vorzugsweise materialeinstückig ausgebildet.

Vorzugsweise ist das Mischelement, insbesondere das Mittelteil mit den Strömungsbeeinflussungselementen, aus einem Material mit guten Gleiteigenschaften hergestellt. Dies umfasst insbesondere ein polymeres Material mit guten Gleiteigenschaften, wie POM (Polyoxymethylen), PA (Polyamid), PC (Polycarbonat), PE (Polyethylen), PP (Polypropylen), PEEK (Polyetheretherketon), PAEK (Polyaryletherketon) und/oder Gemische dieser. Dabei ist es erfindungsgemäß besonders bevorzugt, wenn das Mischelement, insbesondere das Mittelteil mit den Strömungsbeeinflussungselementen, aus POM hergestellt ist. Optional können die zuvor genannten Materialien zudem faserverstärkt sein. Erfindungsgemäß weiter bevorzugt ist daher das Mischelement aus einem faserverstärkten Kunststoff bzw. faserverstärktem polymeren Material bzw. aus einem Faser-Kunststoff-Verbund hergestellt. Die Oberfläche des Mischelements kann eine Rauheit Rₐ von kleiner gleich 2,5 µm, insbesondere eine Rauheit Rₐ von kleiner gleich 2,0 µm aufweisen. Die Rauheit Rₐ wird als Mittenrauwert Rₐ gemäß VDINDE 3400 verstanden und kann mittels bekannter Messmethoden ermittelt werden. Bevorzugt beträgt die Rauheit Rₐ größer gleich 0,5 µm, insbesondere größer gleich 1,0 µm bis kleiner gleich 2,5 µm.

Gleichfalls Gegenstand der vorliegenden Erfindung ist ein statischer Mischer, insbesondere ein dentaler statischer Mischer zum Mischen niedrig- bis hochviskoser Komponenten, insbesondere von mindestens zwei niedrig bis hochviskosen Dentalmaterialien umfassend ein Mischelement umfassend ein flaches, sich entlang einer Längsachse L erstreckendes Mittelteil mit einer Vorderseite und einer der Vorderseite gegenüberliegenden Rückseite, wobei auf der Vorderseite und/oder auf der Rückseite des Mittelteils mindestens zwei Strömungsbeeinflussungselemente angeordnet sind, welche jeweils mindestens eine im Mittelteil befindliche Durchtrittsöffnung einschließen und die Form von im Wesentlichen senkrecht auf der Vorderseite und/oder der Rückseite stehenden Prismenmänteln, insbesondere auf Basis eines orthodiagonalen Vierecks, bevorzugt auf Basis eines Drachenvierecks, besonders bevorzugt einer Raute, aufweisen, welche paarweise an je einer Seitenkante miteinander überlappen oder miteinander verbunden sind, insbesondere umfassend ein erfindungsgemäßes Mischelement, und wobei der statische Mischer ferner eine längliche Mischerhülse mit mindestens einer Auslassöffnung und einen die Mischerhülse verschließenden Mischerdeckel mit mindestens zwei Einlassöffnungen zur Einbringung der zu mischenden Komponenten umfasst, wobei die Mischerhülse zur Aufnahme des Mischelements vorgesehen ist und die Innenwandungen der Mischerhülse sowie die mindestens zwei Strömungsbeeinflussungselemente auf der Vorderseite und/oder der Rückseite des Mittelteils, insbesondere des Mischelements, mindestens zwei miteinander verbundene Mischkammern, insbesondere rautenförmige Mischkammern, ausbilden.

Die Mischkammern werden jeweils durch den von Strömungsbeeinflussungselementen, insbesondere den Prismenmänteln, eingeschlossenen Innenraum gebildet, der auf der einen Seite von der Vorderseite und/oder der Rückseite des Mittelteils und auf der anderen Seite von den Innenwandungen der Mischerhülse begrenzt wird. Somit ist es erfindungsgemäß bevorzugt, wenn die zur Vorderseite und/oder Rückseite des Mittelteils gegenüberliegenden Kante (Oberkante) des jeweiligen Strömungsbeeinflussungselement, insbesondere des Prismenmantels, an der jeweiligen Innenwandung der Mischerhülse anliegt, insbesondere dichtend mit dieser abschließt. Die auf diese Weise gebildeten Mischkammern stehen miteinander durch die gemeinsamen Durchlässe an ihren paarweise miteinander überlappenden oder miteinander verbundenen Seitenkanten und optional durch die im Mittelteil befindlichen Durchtrittsöffnungen in Verbindung. Das Volumen der einzelnen Mischkammer liegt vorzugsweise im Bereich von größer gleich 1 mm³ bis kleiner gleich 50 mm³, bevorzugt größer gleich 10 mm³ bis kleiner gleich 30 mm³, besonders bevorzugt um 20 mm³.

Die erfindungsgemäß gebildeten Mischkammern sind insofern dichtend abgeschlossen, dass die entsprechenden Komponentenströme zwangsläufig die Mischkammern entlang ihrer Strömungsrichtung passieren müssen und weder seitlich noch vor oder hinter der jeweiligen Mischkammer vorbeifließen können.

Die Mischerhülse des erfindungsgemäßen statischen Mischers ist vorzugsweise im Wesentlichen zylinderförmig, vorzugsweise mit einem rechteckigen, insbesondere einem quadratischen, Querschnitt, ausgebildet. Dabei kann der maximale Durchmesser bzw. mindestens eine Seitenlänge des Querschnitts der zylinderförmigen Mischerhülse im Bereich von größer gleich 1 mm bis kleiner gleich 15 mm, bevorzugt größer gleich 5 mm bis kleiner gleich 10 mm, besonders bevorzugt um 7,5 mm liegen, insbesondere mit +/- 1,5 mm. Die Mischerhülse umfasst dabei vorzugsweise mindestens zwei Zylinderabschnitte, insbesondere einen das erfindungsgemäße Mischelement aufnehmenden, ersten Zylinderabschnitt mit einem rechteckigen, insbesondere quadratischen Querschnitt und einen die mindestens eine Auslassöffnung enthaltenden, zweiten Zylinderabschnitt mit einem kreisförmigen Querschnitt. Dabei bilden die von den Innenwandungen, insbesondere den zwei gegenüberliegenden Innenwandungen, des ersten Zylinderabschnitts und den Strömungsbeeinflussungselementen sowie der Vorderseite und/oder Rückseite des Mischelements begrenzten Innenräume die jeweiligen Mischkammern aus. Die Mischerhülse weist an ihrem der Auslassöffnung gegenüberliegenden Ende einen, insbesondere kreiszylindrischen, Aufnahmebereich zur Verbindung mit dem, die Mischerhülse verschließenden, Mischerdeckel auf.

Vorzugsweise sind die Mischerhülse und der Mischerdeckel passgenau miteinander verbunden, insbesondere formschlüssig miteinander verrastet. Vorzugsweise sind zudem die Mischerhülse und der Mischerdeckel verdrehbar zueinander ausgestaltet. Insbesondere sind die Mischerhülse und der Mischerdeckel zueinander verdrehbar trotz formschlüssiger Verrastung. Dabei ist es erfindungsgemäß besonders bevorzugt, wenn der Mischerdeckel die Mischerhülse dichtend verschließt, insbesondere indem der Mischerdeckel eine umlaufende Nut aufweist, in welche eine an der Mischerhülse vorhandene Dichtlippe beim Verrasten des Mischerdeckels auf der Mischerhülse eingreifen kann.

Der Mischerdeckel ist vorzugsweise im Wesentlichen zylinderförmig ausgebildet und weist einen Durchmesser von größer gleich 1 mm bis kleiner gleich 30 mm, bevorzugt größer gleich 5 mm bis kleiner gleich 25 mm, besonders bevorzugt größer gleich 10 mm bis kleiner gleich 20 mm, insbesondere 18 mm, vorzugsweise mit +/-1 mm, sowie eine Höhe von größer gleich 1 mm bis kleiner gleich 40 mm, bevorzugt größer gleich 10 mm bis kleiner gleich 30 mm, besonders bevorzugt größer gleich 15 mm bis kleiner gleich 25 mm, insbesondere 20 mm auf, vorzugsweise +/-1 mm. In diesem Sinne besitzt der Mischerdeckel von außen betrachtet eine kreisscheibenförmige Basisplatte, welche mindestens zwei Einlassöffnungen zur Einbringung der zu mischenden Komponenten, insbesondere zur gleichzeitigen Einbringung der Katalysatorpaste und der Basispaste eines dentalen Abformmaterials, aufweist. Die Einlassöffnungen werden außenseitig vorzugsweise von jeweils einer zylinderförmigen Aufnahme mit einem entsprechend größeren Innendurchmesser umrandet, welche zum Anschluss einer oder mehrerer die zu mischenden Komponenten enthaltenden Kartusche(n) vorgesehen ist. So ist es bevorzugt, wenn der Innendurchmesser der Einlassöffnungen im Bereich von größer gleich 0,1 mm bis kleiner gleich 10 mm, bevorzugt größer gleich 1 mm bis kleiner gleich 8 mm, besonders bevorzugt größer gleich 2 mm bis kleiner gleich 5 mm, und der Außendurchmesser der die Einlassöffnungen umrandenden Aufnahme im Bereich von größer gleich 0,1 mm bis kleiner gleich 10 mm, bevorzugt größer gleich 2 mm bis kleiner gleich 7 mm, besonders bevorzugt größer gleich 3 mm bis kleiner gleich 6 mm liegt.

Insbesondere kann der Mischerdeckel auch als integraler Bestandteil des Mischelements oder als mit dem Mischelement verbundener Bestandteil, vorzugsweise in Form eines Bodenteils, ausgebildet sein, so dass die Mischerhülse beim Einsetzen des Mischelements direkt dichtend verschlossen wird.

Die Mischerhülse und/oder der Mischerdeckel sind vorzugsweise aus einem spritzbaren Kunststoff wie Polyethylen, Polypropylen und/oder Polystyrol oder für den Fall der Herstellung zäherer Mischungen aus hochwertigeren Kunststoffen, insbesondere aus Polyamid, Polyoxymethylen und/oder anderen schlagzäheren Polymeren oder Polymerblends, hergestellt.

Die Höhe des statischen Mischers, insbesondere der Mischerhülse, vorzugsweise einschließlich des Mischerdeckels, also gemessen von den mindestens zwei im Mischerdeckel befindlichen Einlassöffnungen bis zu der mindestens einen Auslassöffnung der Mischerhülse, beträgt vorzugsweise größer gleich 20 mm bis kleiner gleich 150 mm, bevorzug größer gleich 60 mm bis kleiner gleich 90 mm, besonders bevorzugt größer gleich 70 mm bis kleiner gleich 80 mm. Durch diese geringe Ausdehnung des statischen Mischers in Längsrichtung wird zum einen eine unnötige Scherung der zu mischenden Komponenten und zum anderen auch eine Einschränkung des Sichtfeldes bei der Applikation eines entsprechenden Abformmaterials im Mundraum eines Patienten vermieden.

In einer bevorzugten Ausführungsform des erfindungsgemäßen statischen Mischers ist jeweils mindestens eine an der Vorderseite des Mittelteils, insbesondere des Mischelements, ausgebildete Mischkammer mit jeweils mindestens einer an der Rückseite des Mittelteils, insbesondere des Mischelements, ausgebildeten Mischkammer verbunden, insbesondere durch mindestens eine im Mittelteil befindliche Durchtrittsöffnung. Vorzugsweise sind alle auf der Vorderseite des Mittelteils ausgebildeten Mischkammern mit jeweils mindestens einer, insbesondere mit jeweils mindestens zwei, auf der Rückseite des Mischelements ausgebildeten Mischkammer(n) und/oder alle auf der Rückseite des Mittelteils ausgebildeten Mischkammern mit jeweils mindestens einer, insbesondere mit jeweils mindestens zwei, auf der Vorderseite des Mischelements ausgebildeten Mischkammer(n) verbunden. Auf diese Weise kann zumindest ein Teil des sich jeweils auf der Vorderseite oder Rückseite des Mittelteils, insbesondere des Mischelements, befindlichen Komponentenstroms auf die jeweils andere Seite des Mittelteils gelangen und sich mit dem dort gerade vorhandenen Komponentenstrom vermischen.

Ein weiterer Gegenstand der vorliegenden Erfindung ist schließlich die Verwendung eines erfindungsgemäßen Mischelements und/oder eines erfindungsgemäßen statischen Mischers, insbesondere eines dentalen statischen Mischers, vorzugsweise umfassend das erfindungsgemäße Mischelement, zum Mischen von mindestens zwei niedrig- bis hochviskosen Komponenten. Bei den mindestens zwei niedrig- bis hochviskosen Komponenten handelt es sich vorzugsweise um mindestens zwei niedrig- bis hochviskose Dentalmaterialien, insbesondere 2-komponentige (2K-) Dentalmaterialien, wie 2K-Kunststoffe oder 2K-Kleber. Als 2K-Kleber, 2K-Kunststoffe gelten Zusammensetzungen, die zur Aushärtung aus zwei unterschiedlichen Komponenten vor der Applikation gemischt werden. Insbesondere handelt es sich um mindestens zwei pastöse Dentalmaterialien, wie eine Basispaste und eine Katalysatorpaste eines 2-komponentigen (2K-) Abformmaterials.

In einer bevorzugten Ausführungsform der erfindungsgemäßen Verwendung wird die eine niedrig- bis hochviskose Komponente, insbesondere das eine niedrig- bis hochviskose Dentalmaterial, vorzugsweise die Katalysatorpaste (Kat), auf der Vorderseite des Mittelteils und die andere niedrig- bis hochviskose Komponente, insbesondere das niedrig- bis hochviskose Dentalmaterial, vorzugsweise die Basispaste (Base), auf der Rückseite des Mittelteils eingebracht.

Im Zuge des Mischvorgangs wird somit zunächst die eine Komponente (Kat) durch eine erste Einlassöffnung hindurch in eine erste Mischkammer auf der Vorderseite des Mittelteils und die andere Komponente (Base) durch eine zweite Einlassöffnung hindurch in eine erste Mischkammer auf der Rückseite des Mittelteils eingebracht. Sodann findet die Durchmischung der beiden Komponenten auf ihrem Weg in Richtung der mindestens einen Auslassöffnung statt, indem die beiden Komponentenströme mehrfach aufgeteilt, verwirbelt und wieder zusammengeführt werden. Dabei wird der jeweilige Komponentenstrom, ausgehend von der jeweils ersten Mischkammer, teilweise in die entsprechende gegenüberliegende erste Mischkammer auf der anderen Seite des Mittelteils und/oder teilweise in eine in Strömungsrichtung nachfolgende zweite Mischkammer auf der gleichen Seite des Mittelteils geleitet, so dass sich die beiden Komponentenströme nach ihrem Einbringen in Längs- und in Querrichtung aufteilen. Dieser Prozess wiederholt sich in den in Strömungsrichtung nachfolgenden Mischkammern auf der Vorderseite und/oder Rückseite des Mittelteils im weiteren Verlauf des Mischvorgangs immer wieder. Auf diese Weise erfolgt mit jeder weiteren durchströmten Mischkammer eine zunehmende Homogenisierung der beiden Komponenten, so dass sie bei ihrem Austreten durch die mindestens eine Ausbringöffnung und damit beim Ausbringen, insbesondere bei der Applikation, vollständig homogenisiert sein sollten.

Die Erfindung wird anhand der Figuren näher erläutert, ohne die Erfindung auf diese Ausführungsbeispiele zu begrenzen. Es zeigen:
- **Fig. 1a,1b:**: einen erfindungsgemäßen statischen Mischer **0** mit einem erfindungsgemäßen Mischelement **1** sowie Mischerhülse **2** und Mischerdeckel **3**
- **Fig. 2:**: einen Ausschnitt der Vorderseite **10A** und der Rückseite **10B** des Mittelteils **10** eines erfindungsgemäßen Mischelements **1**
- **Fig. 3:**: ein erfindungsgemäßes Mischelement **1** in einer ersten Ausführungsform
- **Fig. 4a,4b:**: eine schematische Darstellung eines erfindungsgemäßen Mischelements 1
- **Fig. 5:**: ein erfindungsgemäßes Mischelement **1** in einer zweiten Ausführungsform mit einem aus Mittelteilsegmenten **10-1, 10-2** zusammengesetzten Mittelteil

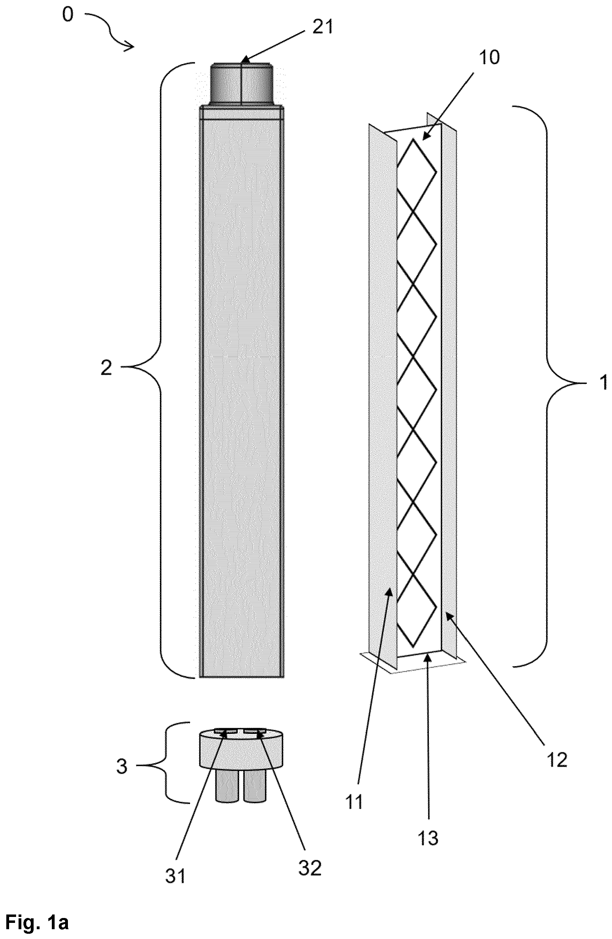

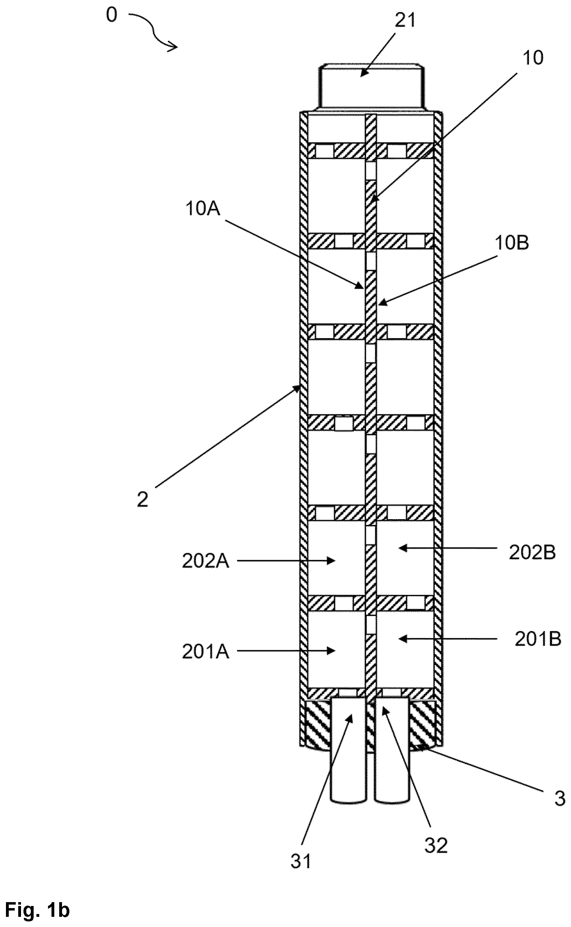

Die **Figuren 1a** und **1b** zeigen einen erfindungsgemäßen statischen Mischer **0** umfassend eine längliche Mischerhülse **2** und einen die Mischerhülse **2** dichtend verschließenden Mischerdeckel **3** sowie ein erfindungsgemäßes Mischelement **1.**

**Figur 1a** zeigt die einzelnen Bestandteile des statischen Mischer **0** getrennt voneinander in der Außenansicht. Das hier dargestellte Mischelement **1** umfasst ein Mittelteil **10** mit darauf angeordneten Strömungsbeeinflussungselementen, welches senkrecht zu einem ersten Seitenteil **11** sowie zu einem zum ersten Seitenteil **11** beabstandet angeordneten zweiten Seitenteil **12** ausgerichtet und mit diesen verbunden ist. Ferner umfasst das Mischelement **1** ein im Wesentlichen senkrecht zum Mittelteil **10** und zum ersten Seitenteil **11** sowie zweiten Seitenteil **12** ausgerichtetes Bodenteil **13.** Das Mischelement **1** kann in eine untere Öffnung der Mischerhülse **2** eingeschoben und von dieser vollständig aufgenommen werden. Die Mischerhülse **2** weist an ihrem oberen Ende eine zylinderförmige Auslassöffnung **21** auf, die zur Ausbringung der über die Einlassöffnungen **31** und **32** des Mischerdeckels **3** einzubringenden und nach Passieren des Mischelements **1** homogenisierten niedrig- bis hochviskosen Komponenten ausgebildet ist. Außenseitig sind die Einlassöffnungen **31** und **32** jeweils mit einer zylinderförmigen Aufnahme zur Befestigung der die jeweiligen Komponenten enthaltenden Kartusche(n) umrandet.

**Figur 1b** zeigt einen Querschnitt durch den in **Figur 1a** dargestellten statischen Mischer 0, bei dem das Mischelement in der durch den Mischerdeckel **3** verschlossenen Mischerhülse **2** angeordnet ist. In dieser Anordnung liegen jeweils das erste und zweite Seitenteil wie auch die Oberkanten der Strömungsbeeinflussungselemente des Mischelements an zwei gegenüberliegenden Innenwandungen der Mischerhülse **2** an. Dabei bilden die Innenwandungen der Mischerhülse **2** sowie die Strömungsbeeinflussungselemente auf der Vorderseite **10A** sowie auf der Rückseite **10B** des Mittelteils **10** jeweils mindestens zwei vorderseitige Mischkammern **201A**, **202A** und mindestens zwei rückseitige Mischkammern **201B**, **202B** aus. Die vorderseitigen Mischkammern **201A**, **202A** und die rückseitigen Mischkammern **201B**, **202B** sind jeweils miteinander wie auch untereinander verbunden. Somit können im Zuge des Mischvorgangs eine durch die Einlassöffnung **31** auf der Vorderseite **10A** des Mittelteils **10** eingebrachte Komponente (Kat) und eine durch die Einlassöffnung **32** auf der Rückseite **10B** des Mittelteils **10** eingebrachte Komponente (Base) auf ihrem Weg in Richtung der Auslassöffnung **21** mehrfach aufgeteilt, verwirbelt und wieder zusammengeführt und somit optimal homogenisiert werden.

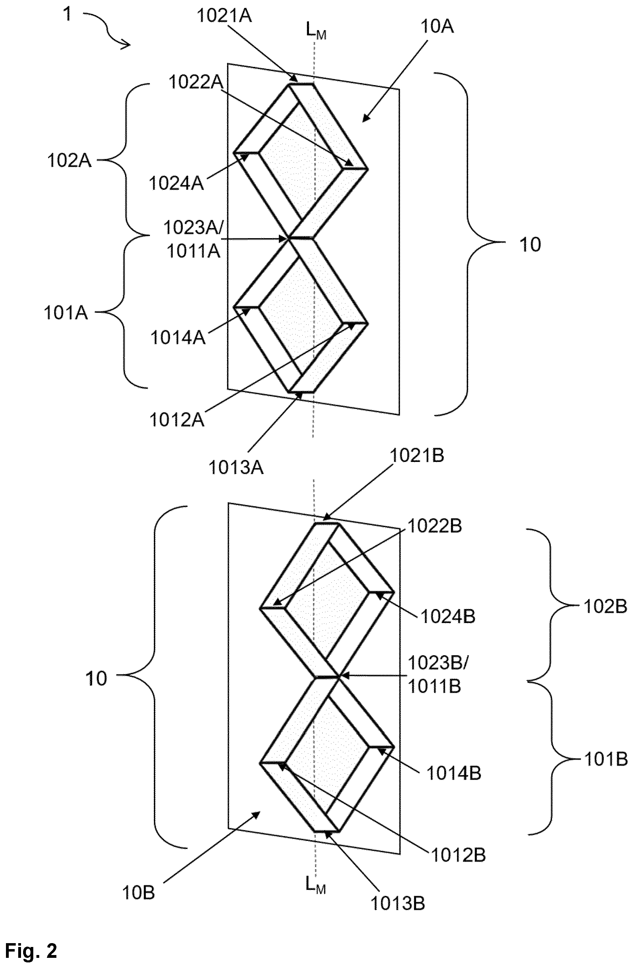

In **Figur 2** ist ein Ausschnitt eines erfindungsgemäßen Mischelements mit Blick auf die Vorderseite **10A** (oben) und die Rückseite **10B** (unten) des Mittelteils **10** dargestellt. Der Ausschnitt zeigt jeweils zwei auf der Vorderseite **10A** bzw. auf der Rückseite **10B** angeordnete Strömungsbeeinflussungselemente **101A, 102A** bzw. **101B**, **102B.** Die Strömungsbeeinflussungselemente **101A, 102A, 101B, 102B** weisen die Form von im Wesentlichen senkrecht auf der Vorderseite **10A** bzw. der Rückseite **10B** stehenden Prismenmänteln auf Basis eines orthogonalen Vierecks, insbesondere einer Raute, auf. Demgemäß besitzt jeder Prismenmantel und damit auch jedes Strömungsbeeinflussungselement **101A, 102A, 101B, 102B** vier Seitenkanten, welche im hier dargestellten Fall senkrecht auf der Vorderseite **10A** bzw. der Rückseite **10B** stehen: eine jeweils oben liegende erste Seitenkante **1011A**, **1021A** bzw. **1011B**, **1021B,** eine jeweils rechts liegende zweite Seitenkante **1012A**, **1022A** bzw. **1012B**, **1022B,** eine jeweils unten liegende dritte Seitenkante **1013A, 1023A** bzw. **1013B**, **1023B** und eine jeweils links liegende vierte Seitenkante **1014A**, **1024A** bzw. **1014B**, **1024B.** Dabei sind die jeweils gegenüberliegenden ersten und dritten Seitenkanten **1011A** - **1013A**, **1021A** - **1023A** bzw. **1011B** - **1013B**, **1021B** - **1023B** und somit insbesondere auch die paarweise miteinander überlappenden oder miteinander verbundenen Seitenkanten **1011A/1023A** bzw. **1011B/1023B** der Strömungsbeeinflussungselemente **101A, 102A** bzw. **101B, 102B** auf der Längsmittelachse L_{M} des Mittelteils **10** angeordnet.

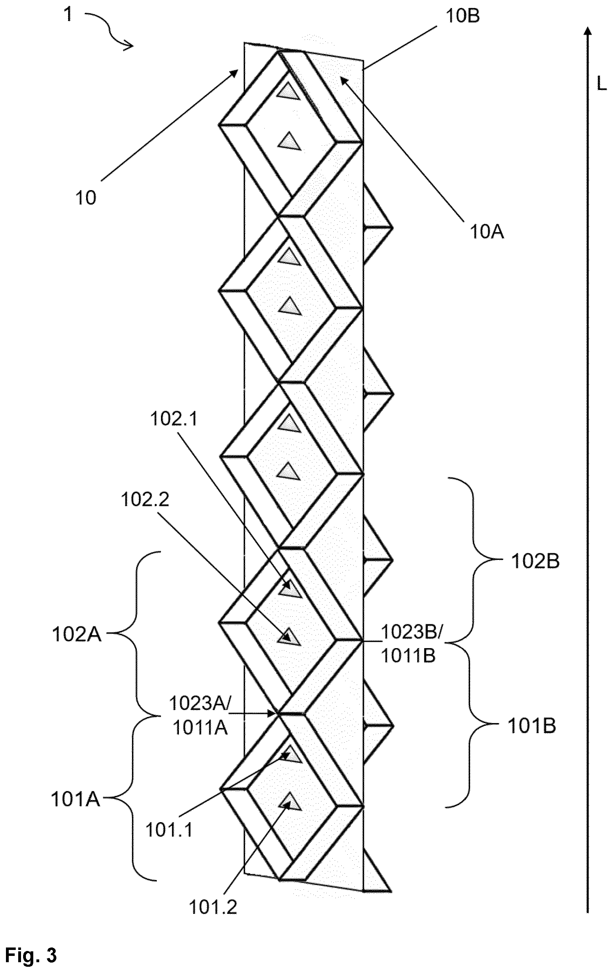

**Figur 3** zeigt eine erste Ausführungsform eines erfindungsgemäßen Mischelements **1** für einen statischen Mischer **0.** Das Mischelement umfasst ein flaches, sich entlang einer Längsachse **L** erstreckendes Mittelteil **10** mit einer Vorderseite **10A** und einer der Vorderseite **10A** gegenüberliegenden Rückseite **10B.** Sowohl auf der Vorderseite **10A** als auch auf der Rückseite **10B** sind mehrere Strömungsbeeinflussungselemente in Form von senkrecht auf der Vorderseite **10A** bzw. der Rückseite **10B** stehenden, aus rechteckigen Seitenflächen zusammengesetzten Prismenmänteln auf Basis einer Raute angeordnet, welche jeweils zwei im Mittelteil **10** befindliche dreieckige Durchtrittsöffnungen einschließen. Die Strömungsbeeinflussungselemente **101A, 102A** bzw. **101B, 102B** auf der Vorderseite **10A** und auf der Rückseite **10B** des Mittelteils **10** sind jeweils paarweise an je einer Seitenkante **1011A/1023A** bzw. **1011B/1023B** miteinander verbunden. Dabei sind die auf der Vorderseite **10A** des Mittelteils **10** befindlichen Strömungsbeeinflussungselemente **101A, 102A** und die auf der Rückseite **10B** des Mittelteils **10** befindlichen Strömungsbeeinflussungselemente in Richtung der Längsachse **L** um ein halbes Strömungsbeeinflussungselement zueinander versetzt angeordnet. Im Zuge dessen ist je eine der von den Strömungsbeeinflussungselementen **101A, 102A, 101B, 102B** eingeschlossenen Durchtrittsöffnungen **101.1**, **102.1** im Bereich, insbesondere an der Engstelle, der paarweise miteinander verbundenen Seitenkanten **1011A/1023A** der Strömungsbeeinflussungselemente **101A, 102A** auf der Vorderseite **10A** des Mittelteils **10** und die andere der von den Strömungsbeeinflussungselementen **101A, 102A, 101B, 102B** eingeschlossenen Durchtrittsöffnungen **101.2**, **102.2** im Bereich, insbesondere an der Engstelle, der paarweise miteinander verbundenen Seitenkanten **1011B/1023B** der Strömungsbeeinflussungselemente **101B, 102B** auf der Rückseite **10B** des Mittelteils **10** angeordnet.

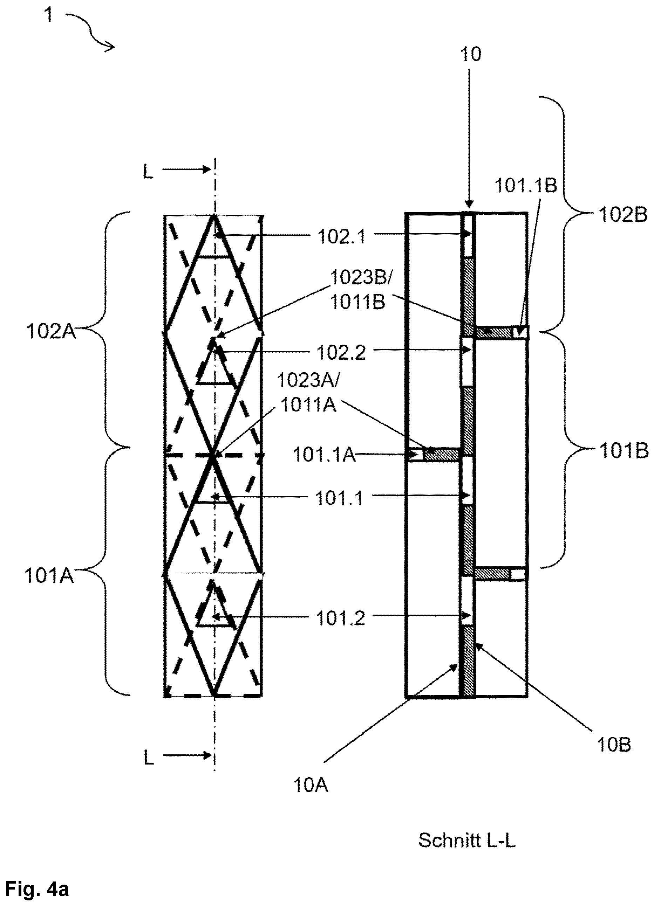

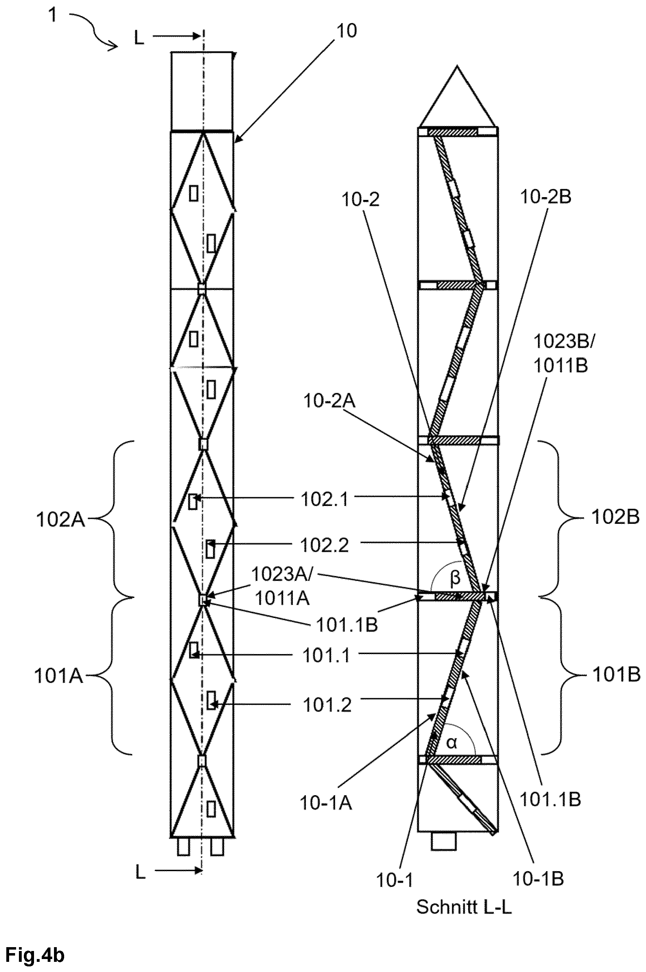

Die **Figuren 4a** und **4b** zeigen schematische Darstellungen je einer Ausführungsform eines erfindungsgemäßen Mischelements **1.**

**Figur 4a** zeigt das Schema einer ersten Ausführungsform eines erfindungsgemäßen Mischelements **1** mit einem planar ausgestalteten Mittelteil **10,** wobei auf der linken Seite eine Vorderansicht und auf der rechten Seite eine Schnittansicht dargestellt ist. Bei dieser Ausführungsform sind die auf der Vorderseite **10A** des Mittelteils **10** befindlichen Strömungsbeeinflussungselemente **101A, 102A** und die auf der Rückseite **10B** des Mittelteils **10** befindlichen Strömungsbeeinflussungselemente **101B, 102B** (als gestrichelte Linien dargestellt) um ein halbes Strömungsbeeinflussungselement versetzt zueinander angeordnet. Das heißt, dass die paarweise miteinander überlappenden oder miteinander verbundenen Seitenkanten **1011A/1023A** der Strömungsbeeinflussungselemente **101A, 102A** auf der Vorderseite **10A** des Mittelteils **10** in Höhe des jeweiligen Mittelpunkts der rautenförmigen Strömungsbeeinflussungselemente **101B, 102B** auf der Rückseite **10B** des Mittelteils **10** und die paarweise miteinander überlappenden oder miteinander verbundenen Seitenkanten **1011B/1023B** der Strömungsbeeinflussungselemente **101B, 102B** auf der Rückseite **10B** des Mittelteils **10** in Höhe des jeweiligen Mittelpunkts der rautenförmigen Strömungsbeeinflussungselemente **101A, 102A** auf der Vorderseite **10A** des Mittelteils **10** angeordnet sind. Die Durchtrittsöffnungen **101.1**, **102.1** bzw. **101.2**, **102.2** befinden sich somit in Bezug auf den Strömungsweg der zu mischenden Komponenten jeweils am Ende einer durch das entsprechende Strömungsbeeinflussungselement **101A, 102A** bzw. **101B, 102B** auf der Vorderseite **10A** und der Rückseite **10B** gebildeten Mischkammer, was eine effizientere Aufteilung der Komponentenströme aufgrund des an den Übergängen der Mischkammern ineinander entstehenden Rückstaus ermöglicht. Darüber hinaus ist auch ein (teilweises Vorwärtsströmen der Komponentenströme möglich), da sowohl die vorderseitigen Strömungsbeeinflussungselemente **101A, 102A** als auch die rückseitigen Strömungsbeeinflussungselemente **101B, 102B** miteinander an ihren paarweise miteinander überlappenden oder miteinander verbundenen Seitenkanten **1011A/1023A** bzw. **1011B/1023B** durch einen gemeinsamen Durchlass **101A.1** bzw. **101B.1** verbunden sind.

**Figur 4b** zeigt das Schema einer zweiten Ausführungsform eines erfindungsgemäßen Mischelements **1** mit einem aus mehreren in einem Winkel α nach hinten und in einem Winkel β nach vorne geneigten, Mittelteilsegmenten zusammengesetzten Mittelteil **10,** wobei auf der linken Seite eine Vorderansicht und auf der rechten Seite eine Schnittansicht dargestellt ist. Bei dieser Ausführungsform sind auf der Vorderseite **10-1A, 10-2A** je eines Mittelteilsegments **10-1**, **10-2** je ein Strömungsbeeinflussungselement **101A, 102A** und auf der Rückseite **10-1B, 10-2B** je eines Mittelteilsegments **10-1, 10-2** je ein Strömungsbeeinflussungselement **101B, 102B** angeordnet. Das heißt, dass die Strömungsbeeinflussungselemente **101A, 102A** auf der Vorderseite **10-1A, 10-2A** der Mittelteilsegmente **10-1, 10-2** an ihren paarweise miteinander überlappenden oder miteinander verbundenen Seitenkanten **1011A/1023A** spitz aufeinandertreffen, während die Strömungsbeeinflussungselemente **101B, 102B** Rückseite **10-1B, 10-2B** der Mittelteilsegmente **10-1**,**10-2** an ihren paarweise miteinander überlappenden oder miteinander verbundenen Seitenkanten **1011B/1023B** stumpf aufeinandertreffen. Dabei ist der gemeinsame Durchlass **101A.1** an den paarweise miteinander überlappenden oder miteinander verbundenen Seitenkanten **1011A/1023A** der spitz aufeinandertreffenden Strömungsbeeinflussungselementen **101A, 102A** doppelt so groß wie der gemeinsame Durchlass **101B.1** an den paarweise miteinander überlappenden oder miteinander verbundenen Seitenkanten **1011B/1023B** der stumpf aufeinandertreffenden Strömungsbeeinflussungselementen **101B, 102B** ausgestaltet. Dies erhöht den Fließwiderstand des jeweiligen Komponentenstroms in der sich in Bezug auf die Tiefe verjüngenden rückseitigen Mischkammern, während gleichzeitig in der sich in Bezug auf die Tiefe ausdehnenden vorderseitigen Mischkammern ein leichteres Vorwärtsströmen des jeweiligen Komponentenstroms stattfinden kann. Eine Auftrennung der Komponentenströme in die jeweils gegenüberliegenden Mischkammern wird durch die von den Strömungsbeeinflussungselementen **101A, 102A** bzw. **101B, 102B** eingeschlossenen Durchtrittsöffnungen **101.1**, **101.2**, **102.1**, **102.2** gewährleistet.

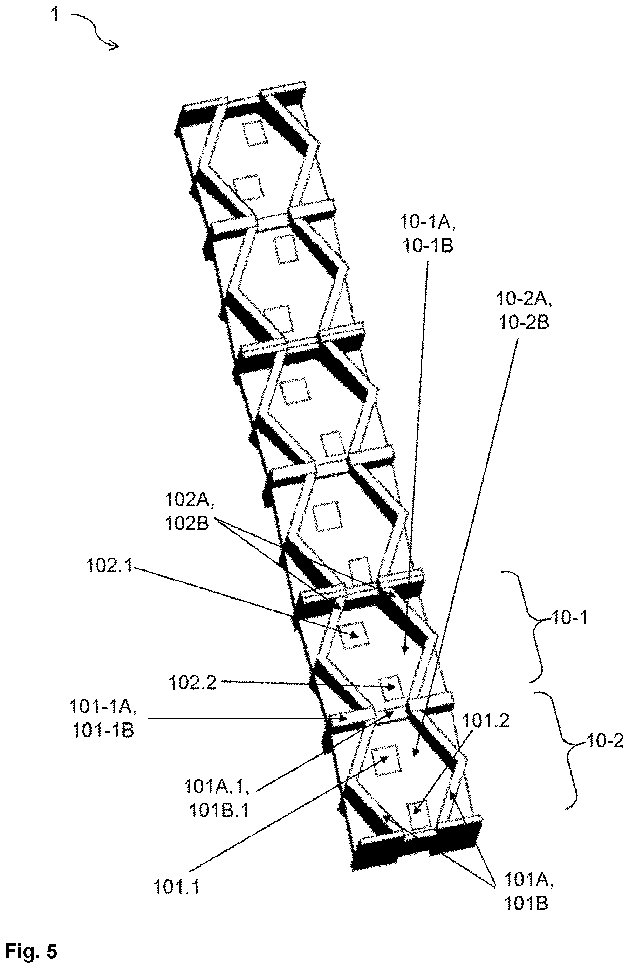

**Figur 5** zeigt die zweite Ausführungsform eines erfindungsgemäßen Mischelements **1** für einen statischen Mischer **0**, bei welcher das Mittelteil aus mehreren Mittelteilsegmenten zusammengesetzt ist, die alternierend nach hinten und nach vorne geneigt sind. Wie auf den Vorderseiten **10-1A, 10-2A** der Mittelteilsegmente **10-1, 10-2** ist auch auf den Rückseiten **10-1B, 10-2B** der Mittelteilsegmente **10-1, 10-2** je ein Strömungsbeeinflussungselement **101A, 102A** bzw. **101B, 102B** in Form eines senkrecht auf den Vorderseiten **10-1A**, **10-2A** bzw. den Rückseiten **10-1B, 10-2B** stehenden, aus trapezförmigen Seitenflächen zusammengesetzten Prismenmantels auf Basis einer Raute angeordnet, welches jeweils zwei rechteckige Durchtrittsöffnungen **101.1**, **101.2**, **102.1, 102.2** einschließt. Die Strömungsbeeinflussungselemente **101A, 102A** bzw. **101B, 102B** überlappen jeweils paarweise an je einer Seitenkante **1011A/1023A** bzw. **1011B/1023B,** wodurch sich ein gemeinsamer Durchlass **101A.1** bzw. **101B.1** ausbildet, der durch einen zwischen den Mittellteilsegmenten **10-1, 10-2** auf der Vorderseite **10-1A, 10-2A** bzw. der Rückseite **10-1B, 10-2B** angeordneten Quersteg **101-1A** bzw. **101-1B** stabilisiert wird. Durch den besonderen Verlauf der Mittelteilsegmente verjüngt sich jede zweite der von den Strömungsbeeinflussungselementen gebildete Mischkammer an ihrem Übergang in die nachfolgende Mischkammer nicht nur in Bezug auf ihre Breite, sondern auch in Bezug auf ihre Tiefe, wodurch der Fließwiderstand eines entsprechenden Komponentenstroms in axialer Richtung derart ansteigt, dass ein Teilstrom des Komponentenstroms durch die von den Strömungsbeeinflussungselementen eingeschlossenen Durchtrittsöffnungen in die gegenüberliegende Mischkammer gelangt und sich mit dem dort befindlichen Komponentenstrom vermischt.

### Bezugszeichen:

- **0**: Statischer Mischer
- **1**: Mischelement, insbesondere für einen statischen Mischer
- **10**: Mittelteil des Mischelements **1**
- **10-1,10-2**: Mittelteilsegmente des Mittelteils **10**
- **101.1,101.2, 102.1,102.2**: Durchtrittsöffnungen im Mittelteil **10**
- **10A**: Vorderseite des Mittelteils **10**
- **10-1A,10-2A**: Vorderseite der Mittelteilsegmente **10-1,10-2**
- **101A,102A**: Strömungsbeeinflussungselemente auf der Vorderseite **10A** des Mittelteils **10** bzw. auf der Vorderseite **10-1A,10-2A** der Mittelteilsegmente **10-1,10-2**
- **101A.1**: gemeinsamer Durchlass der Strömungsbeeinflussungselemente **101A,102A**
- **1011A,1021A**: erste Seitenkante der Strömungsbeeinflussungselemente **101A, 102A**
- **1012A,1022A**: zweite Seitenkante der Strömungsbeeinflussungselemente **101A, 102A**
- **1013A,1023A**: dritte Seitenkante der Strömungsbeeinflussungselemente **101A, 102A**
- **1014A,1024A**: vierte Seitenkante der Strömungsbeeinflussungselemente **101A, 102A**
- **101-1A**: Quersteg auf der Vorderseite **10-1A, 10-2A** der Mittelteilsegmente **10-1,10-2**
- **10B**: Rückseite des Mittelteils **10**
- **10-1B,10-2B**: Rückseite der Mittelteilsegmente **10-1,10-2**
- **101B,102B**: Strömungsbeeinflussungselemente auf der Rückseite **10B** des Mittelteils **10** bzw. auf der Rückseite **10-1B,10-2B** der Mittelteilsegmente **10-1,10-2**
- **101B.1**: gemeinsamer Durchlass der Strömungsbeeinflussungselemente **101B,102B**
- **1011B,1021B**: erste Seitenkante der Strömungsbeeinflussungselemente **101B, 102B**
- **1012B,1022B**: zweite Seitenkante der Strömungsbeeinflussungselemente **101B, 102B**
- **1013B,1023B**: dritte Seitenkante der Strömungsbeeinflussungselemente **101B, 102B**
- **1014B,1024B**: vierte Seitenkante der Strömungsbeeinflussungselemente **101B, 102B**
- **101-1B**: Quersteg auf der Rückseite **10-1B, 10-2B** der Mittelteilsegmente **10-1,10-2**
- **11**: erstes Seitenteil des Mischelements **1**
- **12**: zweites Seitenteil des Mischelements **1**
- **13**: Bodenteil des Mischelementes **1**
- **2**: Mischerhülse des statischen Mischers **0**
- **21**: Auslassöffnung in der Mischerhülse **2**
- **201A,202A**: Mischkammern, ausgebildet durch die Innenwandungen der Mischerhülse **2** und die vorderseitigen Strömungselemente **101A,102A**
- **201B,202B**: Mischkammern, ausgebildet durch die Innenwandungen der Mischerhülse **2** und die vorderseitigen Strömungselemente **101A,102A**
- **3**: Mischerdeckel, der die Mischerhülse **2** verschließt
- **31,32**: Einlassöffnungen im Mischerdeckel **3**
- **L**: Längsachse
- **L_{M}**: Längsmittelachse des Mittelteils **10**
- **α**: Winkel, in dem ein Mittelteilsegment **101 bzw. 102** nach hinten in Bezug auf die Längsachse **L** geneigt ist
- **β**: Winkel, in dem ein Mittelteilsegment **101 bzw. 102** nach vorne in Bezug auf die Längsachse **L** geneigt ist

## Patentansprüche

1. Mischelement (1) für einen statischen Mischer (0), insbesondere einen dentalen statischen Mischer, zum Mischen niedrig- bis hochviskoser Komponenten,
umfassend ein flaches, sich entlang einer Längsachse L erstreckendes Mittelteil (10) mit einer Vorderseite (10A) und einer der Vorderseite (10A) gegenüberliegenden Rückseite (10B), wobei auf der Vorderseite (10A) und/oder auf der Rückseite (10B) des Mittelteils (10) mindestens zwei Strömungsbeeinflussungselemente (101A, 102A, 101B, 102B) angeordnet sind, welche jeweils mindestens eine im Mittelteil (10) befindliche Durchtrittsöffnung (101.1, 101.2, 102.1, 102.2) einschließen,
**dadurch gekennzeichnet, dass**
die Strömungsbeeinflussungselemente (101A, 102A, 101B, 102B) die Form von im Wesentlichen senkrecht auf der Vorderseite (10A) und/oder der Rückseite (10B) stehenden Prismenmänteln aufweisen, welche paarweise an je einer Seitenkante (1011A/1023A, 1011B/1023B) miteinander überlappen oder miteinander verbunden sind.

2. Mischelement (1) nach Anspruch 1, **dadurch gekennzeichnet, dass** die Strömungsbeeinflussungselemente (101A, 102A ,101B, 102B) an ihren paarweise miteinander überlappenden oder miteinander verbundenen Seitenkanten (1011A/1023A, 1011B/1023B) jeweils einen gemeinsamen Durchlass (101A.1,101B.1) aufweisen.

3. Mischelement (1) nach Anspruch 1 oder 2, **dadurch gekennzeichnet, dass** die paarweise miteinander überlappenden oder miteinander verbundenen Seitenkanten (1011A/1023A, 1011B/1023B) der mindestens zwei Strömungsbeeinflussungselemente (101A, 102A, 101B, 102B) auf der Längsmittelachse L_{M} des Mittelteils (10) angeordnet sind.

4. Mischelement (1) nach einem der Ansprüche 1 bis 3, **dadurch gekennzeichnet, dass** das Mittelteil (10) mindestens zwei auf der Vorderseite (10A) angeordnete Strömungsbeeinflussungselemente (101A, 102A) und mindestens zwei auf der Rückseite (10B) angeordnete Strömungsbeeinflussungselemente (101B, 102B) umfasst, welche zumindest teilweise in Richtung der Längsachse L zueinander versetzt sind.

5. Mischelement (1) nach Anspruch 4, **dadurch gekennzeichnet, dass** die mindestens zwei auf der Vorderseite (10A) angeordneten Strömungsbeeinflussungselemente (101A, 102A) und die mindestens zwei auf der Rückseite (10B) angeordneten Strömungsbeeinflussungselemente (101B, 102B) jeweils mindestens zwei im Mittelteil (10) befindliche Durchtrittsöffnungen (101.1, 101.2, 102.1, 102.2) einschließen, wobei die eine Durchtrittsöffnung (101.1, 102.1) im Bereich der paarweise miteinander überlappenden oder miteinander verbundenen Seitenkanten (1011A/1023A) der Strömungsbeeinflussungselemente (101A, 102A) auf der Vorderseite (10A) und die andere Durchtrittsöffnung (101.2, 102.2) im Bereich der paarweise miteinander überlappenden oder miteinander verbundenen Seitenkanten (1011B/1023B) der Strömungsbeeinflussungselemente (101B, 102B) auf der Rückseite (10B) angeordnet ist.

6. Mischelement (1) nach einem der Ansprüche 1 bis 3, **dadurch gekennzeichnet, dass** das Mittelteil (10) aus mindestens zwei Mittelteilsegmenten (10-1, 10-2) zusammengesetzt ist, welche alternierend in einem Winkel α nach hinten und in einem Winkel β nach vorne in Bezug auf die Längsachse L geneigt sind, wobei je ein Strömungsbeeinflussungselement (101A, 102A,101B, 102B) auf der Vorderseite (10-1A, 10-2A) und/oder auf der Rückseite (10-1B/10-2B) je eines Mittelteilsegments (10-1, 10-2) angeordnet ist.

7. Mischelement (1) nach Anspruch 6, **dadurch gekennzeichnet, dass** der Winkel α größer gleich 1° bis kleiner gleich 89°, bevorzugt größer gleich 25° bis kleiner gleich 85°, besonders bevorzugt größer gleich 50° bis kleiner gleich 80°, und/oder der Winkel β kleiner gleich -1° bis größer gleich -89°, bevorzugt kleiner gleich -25° bis größer gleich -85°, besonders bevorzugt kleiner gleich -50° bis größer gleich -80°, in Bezug auf die Längsachse L beträgt.

8. Mischelement (1) nach Anspruch 6 oder 7, **dadurch gekennzeichnet, dass** die Strömungsbeeinflussungselemente (101A, 102A, 101B, 102B) auf der Vorderseite (10-1A, 10-2A) und/oder Rückseite (10-1B, 10-2B) benachbarter Mittelteilsegmente (10-1,10-2) an ihren paarweise miteinander überlappenden oder miteinander verbundenen Seitenkanten (1011A/1023A, 1011B/1023B) alternierend stumpf oder spitz aufeinandertreffen, wobei der gemeinsame Durchlass (101A.1) an den paarweise miteinander überlappenden oder miteinander verbundenen Seitenkanten (1011A/1023A) von zwei spitz aufeinandertreffenden Strömungsbeeinflussungselementen (101A, 102A) größer ist als der gemeinsame Durchlass (101B.1) an den paarweise miteinander überlappenden oder miteinander verbundenen Seitenkanten (1011B/1023B) von zwei stumpf aufeinandertreffenden Strömungsbeeinflussungselementen (101B, 102B).

9. Mischelement (1) nach einem der Ansprüche 6 bis 8, **dadurch gekennzeichnet, dass** auf der Vorderseite (10-1A, 10-2A) und/oder auf der Rückseite (10-1B, 10-2B) zwischen zwei Mittelteilsegmenten (10-1, 10-2) je ein im Wesentlichen senkrecht zur Längsachse L ausgerichteter Quersteg (101-1A bzw. 101-1B) angeordnet ist.

10. Mischelement (1) nach einem der Ansprüche 1 bis 9, **dadurch gekennzeichnet, dass** das Mischelement (1) ferner ein erstes Seitenteil (11) sowie ein zum ersten Seitenteil (11) beabstandet angeordnetes zweites Seitenteil (12) umfasst und das Mittelteil (10) so mit dem ersten Seitenteil (11) und dem zweiten Seitenteil (12) verbunden ist, dass die Vorderseite (10A) und die Rückseite (10B) im Wesentlichen senkrecht zum ersten Seitenteil (11) und/oder zum zweiten Seitenteil (12) ausgerichtet sind.

11. Mischelement (1) nach einem der Ansprüche 1 bis 10, **dadurch gekennzeichnet, dass** das Mischelement (1) ferner ein Bodenteil (13) mit mindestens einer Eintrittsöffnung, insbesondere mit mindestens zwei Eintrittsöffnungen, umfasst, welches im Wesentlichen senkrecht zum Mittelteil (10) und/oder zum ersten Seitenteil (11) sowie zum zweiten Seitenteil (12) ausgerichtet ist.

12. Mischelement (1) nach einem der Ansprüche 1 bis 11, **dadurch gekennzeichnet, dass** die Prismenmäntel auf Basis eines orthodiagonalen Vierecks ausgebildet sind.

13. Statischer Mischer (0), insbesondere dentaler statischer Mischer, zum Mischen niedrigbis hochviskoser Komponenten, umfassend ein Mischelement (1) nach einem der Ansprüche 1 bis 12, wobei der statische Mischer (0) ferner eine längliche Mischerhülse (2) mit mindestens einer Auslassöffnung (21) und einen die Mischerhülse (2) verschließenden Mischerdeckel (3) mit mindestens zwei Einlassöffnungen (31, 32) zur Einbringung der zu mischenden Komponenten umfasst, **dadurch gekennzeichnet, dass**
die Mischerhülse (2) zur Aufnahme des Mischelements (1) vorgesehen ist und die Innenwandungen der Mischerhülse (2) sowie die mindestens zwei Strömungsbeeinflussungselemente (101A, 102A, 101B, 102B) auf der Vorderseite (10A) und/oder der Rückseite (10B) des Mittelteils (10) mindestens zwei miteinander verbundene Mischkammern (201A, 202A, 201B, 202B) ausbilden.

14. Statischer Mischer (0) nach Anspruch 13, **dadurch gekennzeichnet, dass** jeweils mindestens eine an der Vorderseite (10A) des Mittelteils (10) ausgebildete Mischkammer (201A, 202A) ferner mit jeweils mindestens einer an der Rückseite (10B) des Mittelteils (10) ausgebildeten Mischkammer (201B, 202B) verbunden ist.

15. Verwendung eines Mischelements (1) nach einem der Ansprüche 1 bis 12 oder eines statischen Mischers (0) nach Anspruch 13 oder 14 zum Mischen von mindestens zwei niedrig- bis hochviskosen Komponenten, insbesondere von mindestens zwei niedrig- bis hochviskosen Dentalmaterialien.

## Claims

1. Mixing element (1) for a static mixer (0), in particular a dental static mixer, for mixing low-to high-viscosity components,
comprising a flat middle part (10) extending along a longitudinal axis L and having a front side (10A) and a rear side (10B) opposite the front side (10A), **characterized in that** at least two flow influencing elements (101A, 102A, 101B, 102B) are arranged on the front side (10A) and/or on the rear side (10B) of the middle part (10), each of the flow influencing elements (101A, 102A, 101B, 102B) enclosing at least one passage opening (101.1, 101.2, 102.1, 102.2) located in the middle part (10),
**characterized in that**
the flow-influencing elements (101A, 102A, 101B, 102B) having the form of prism shells standing substantially perpendicularly on the front side (10A) and/or the rear side (10B), which overlap or are connected to one another in pairs at a respective side edge (1011A/1023A, 1011B/ 1023B).

2. Mixing element (1) according to claim 1, **characterized in that**
the flow influencing elements (101A, 102A ,101B, 102B) each having a common passage (101A.1,101B.1) at their side edges (1011A/1023A, 1011B/1023B), which overlap or are connected to each other in pairs.

3. Mixing element (1) according to claim 1 or 2, **characterized in that**
the side edges (1011A/1023A, 1011B/1023B) of the at least two flow influencing elements (101A, 102A, 101B, 102B), which overlap or are connected to each other in pairs, are arranged on the longitudinal center axis L_{M} of the middle part (10).

4. Mixing element (1) according to any of claims 1 to 3, **characterized in that**
the middele part (10) exhibiting at least two flow influencing elements (101A, 102A) arranged on the front side (10A) and at least two flow influencing elements (101B, 102B) arranged on the rear side (10B), which are at least partially offset from each other in the direction of the longitudinal axis L.

5. Mixing element (1) according to claim 4, **characterized in that**
the at least two flow-influencing elements (101A, 102A) arranged on the front side (10A) and the at least two flow-influencing elements (101B, 102B) arranged on the rear side (10B) each include at least two through-openings (101.1, 101.2, 102.1, 102.2) located in the middle part (10), wherein the one through-opening (101.1, 102.1) is arranged in the region of the pairwise overlapping or interconnected side edges (1011A/1023A) of the flow-influencing elements (101A, 102A) on the front side (10A) and the other passage opening (101.2, 102.2) is arranged in the region of the pairwise overlapping or interconnected side edges (1011B/1023B) of the flow-influencing elements (101B, 102B) on the rear side (10B).

6. Mixing element (1) according to any of claims 1 to 3, **characterized in that**
the middle part (10) is composed of at least two middle part segments (10-1, 10-2) which are alternately inclined at an angle α to the rear and at an angle β to the front with respect to the longitudinal axis L, wherein a flow influencing element (101A, 102A, 101B, 102B) is arranged on the front side (10-1A, 10-2A) and/or on the rear side (10-1B/10-2B) of each middle part segment (10-1, 10-2).

7. Mixing element (1) according to claim 6, **characterized in that**
the angle α is greater than or equal to 1° and less than or equal to 89°, preferably greater than or equal to 25° and less than or equal to 85°, particularly preferably greater than or equal to 50° and less than or equal to 80°, and/or the angle β is less than or equal to -1° and greater than or equal to -89°, preferably less than or equal to -25° and greater than or equal to -85°, particularly preferably less than or equal to -50° and greater than or equal to -80°, with respect to the longitudinal axis L.

8. Mixing element (1) according to claim 6 or 7, **characterized in that**
the flow influencing elements (101A, 102A, 101B, 102B) on the front side (10-1A, 10-2A) and/or rear side (10-1B, 10-2B) of adjacent middle part segments (10-1, 10-2) alternately meeting each other obtusely or acutely at their side edges (1011A/1023A, 1011B/1023B) overlapping or connected to each other in pairs, wherein the common passage (101A.1) at the pairwise overlapping or interconnected side edges (1011A/1023A) of two flow influencing elements (101A, 102A) meeting each other acutely is larger than the common passage (101B.1) at the pairwise overlapping or interconnected side edges (1011B/1023B) of two flow influencing elements (101B, 102B) meeting each other obtusely.

9. Mixing element (1) according to any of claims 6 to 8, **characterized in that** on the front side (10-1A, 10-2A) and/or on the rear side (10-1B, 10-2B) between two middle part segments (10-1, 10-2) in each case there is arranged a crossbar (101-1A and 101-1B, respectively) oriented substantially perpendicular to the longitudinal axis L.

10. Mixing element (1) according to any of claims 1 to 9, **characterized in that**
the mixing element (1) further comprises a first side part (11) and a second side part (12) arranged at a distance from the first side part (11), and the middle part (10) is connected to the first side part (11) and the second side part (12) in such a way that the front side (10A) and the rear side (10B) are aligned substantially perpendicular to the first side part (11) and/or the second side part (12).

11. Mixing element (1) according to any of claims 1 to 10, **characterized in that**
the mixing element (1) further comprises a bottom part (13) with at least one inlet opening, in particular with at least two inlet openings, which is oriented substantially perpendicular to the middle part (10) and/or to the first side part (11) as well as to the second side part (12).

12. Mixing elemment (1) according to any of claims 1 to 11, **characterized in that** the prism shells are formed on the basis of an orthodiagonal quadrilateral,

13. Static mixer (0), in particular dental static mixer, for mixing low- to high-viscosity components, comprising a mixing element (1) according to any of claims 1 to 12,
**characterized in that** the static mixer (0) further comprising an elongated mixer sleeve (2) with at least one outlet opening (21) and a mixer lid (3) closing the mixer sleeve (2) and having at least two inlet openings (31, 32) for introducing the components to be mixed, **characterized in that**
the mixer sleeve (2) is provided for receiving the mixing element (1), and the inner walls of the mixer sleeve (2) and the at least two flow-influencing elements (101A, 102A, 101B, 102B) on the front side (10A) and/or the rear side (10B) of the middle part (10) forming at least two interconnected mixing chambers (201A, 202A, 201B, 202B).

14. Static mixer (0) according to claim 13, **characterized in that** at least one mixing chamber (201A, 202A) formed on the front side (10A) of the middle part (10), respectively, is further connected to at least one mixing chamber (201B, 202B) formed on the rear side (10B) of the middle part (10), respectively.

15. Use of a mixing element (1) according to any of the claims 1 to 12 or a static mixer (0) according to claim 13 or 14 for mixing at least two low- to high-viscosity components, in particular at least two low- to high-viscosity dental materials.

## Revendications

1. Élément de mélange (1) pour un mélangeur statique (0), notamment un mélangeur statique dentaire, permettant le mélange de composants de viscosité variable, comprenant une partie centrale (10) plate, s'étendant le long d'un axe longitudinal L, avec une face avant (10A) et une face arrière (10B) opposée à la face avant (10A), au moins deux éléments influençant l'écoulement (101A, 102A, 101B, 102B) étant disposés sur la face avant (10A) et/ou sur la face arrière (10B) de la partie centrale (10), lesquels incluent chacun au moins un orifice de passage (101.1, 101.2, 102.1, 102.2) dans la partie centrale (10),
**caractérisé en ce que**
les éléments influençant l'écoulement (101A, 102A, 101B, 102B) présentent la forme d'enveloppes prismatiques étant essentiellement perpendiculairement sur la face avant (10A) et/ou la face arrière (10B), lesquelles se chevauchent ou sont reliées entre elles par paires, chacune sur un bord latéral (1011A/1023A, 1011B/1023B).

2. Élément de mélange (1) selon la revendication 1, **caractérisé en ce que**
les éléments influençant l'écoulement (101A, 102A, 101B, 102B) présentent chacun un passage commun (101A.1, 101B.1) sur leurs bords latéraux (1011A/1023A, 1011B/1023B) qui se chevauchent ou qui sont reliés entre eux par paires.

3. Élément de mélange (1) selon la revendication 1 ou 2, **caractérisé en ce que**
les bords latéraux (1011A/1023A, 1011B/1023B) se chevauchant ou reliés entre eux par paires des au moins deux éléments influençant l'écoulement (101A, 102A, 101B, 102B), sont disposés sur l'axe central longitudinal L_{M} de la partie centrale (10).

4. Élément de mélange (1) selon l'une des revendications 1 à 3, **caractérisé en ce que** la partie centrale (10) comprend au moins deux éléments influençant l'écoulement (101A, 102A) disposés sur la face avant (10A) et au moins deux éléments influençant l'écoulement (101B, 102B) disposés sur la face arrière (10B), lesquels sont au moins partiellement décalés les uns par rapport aux autres dans la direction de l'axe longitudinal L.

5. Élément de mélange (1) selon la revendication 4, **caractérisé en ce que**
les au moins deux éléments influençant l'écoulement (101A, 102A) disposés sur la face avant (10A) et les au moins deux éléments influençant l'écoulement (101B, 102B) disposés sur la face arrière (10B) incluent chacun au moins deux orifices de passage (101.1, 101.2, 102.1, 102.2) dans la partie centrale (10), l'un des orifices de passage (101.1, 102.1) étant disposé dans la zone des bords latéraux (1011A/1023A) des éléments influençant l'écoulement (101A, 102A), qui se chevauchent ou qui sont reliés entre eux par paires, sur la face avant (10A), et l'autre orifice de passage (101.2, 102.2) étant disposé dans la zone des bords latéraux (1011B/1023B) des éléments influençant l'écoulement (101B, 102B), qui se chevauchent ou qui sont reliés entre eux par paires sur la face arrière (10B).

6. Élément de mélange (1) selon l'une des revendications 1 à 3, **caractérisé en ce que** la partie centrale (10) est composée d'au moins deux segments de partie centrale (10-1, 10-2) qui sont inclinés en alternance d'un angle α vers l'arrière et d'un angle β vers l'avant par rapport à l'axe longitudinal L, un élément influençant l'écoulement (101A, 102A, 101B, 102B) étant respectivement disposé sur la face avant (10-1A, 10-2A) et/ou sur la face arrière (10-1B/10-2B) de chaque segment de partie centrale (10-1, 10-2).

7. Élément de mélange (1) selon la revendication 6, **caractérisé en ce que**
l'angle α est supérieur ou égal à 1° jusqu'à inférieur ou égal à 89°, préférablement supérieur ou égal à 25° jusqu'à inférieur ou égal à 85°, plus préférablement supérieur ou égal à 50° jusqu'à inférieur ou égal à 80°, et/ou l'angle β est inférieur ou égal à -1° jusqu'à supérieur ou égal à -89°, préférablement inférieur ou égal à -25° jusqu'à supérieur ou égal à -85°, plus préférablement inférieur ou égal à -50° jusqu'à supérieur ou égal à -80°, par rapport à l'axe longitudinal L.

8. Élément de mélange (1) selon la revendication 6 ou 7, **caractérisé en ce que**
les éléments influençant l'écoulement (101A, 102A, 101B, 102B) se rencontrent en alternance de manière obtuse ou pointue sur la face avant (10-1A, 10-2A) et/ou la face arrière (10-1B, 10-2B) de segments de partie centrale (10-1, 10-2) adjacents, sur leurs bords latéraux (1011A/1023A, 1011B/1023B) se chevauchant ou reliés entre eux par paires, le passage commun (101A.1) sur les bords latéraux (1011A/1023A) se chevauchant ou reliés entre eux par paires de deux éléments influençant l'écoulement (101A, 102A) se rencontrant en pointe étant plus grand que le passage commun (101B.1) sur les bords latéraux (1011B/1023B) se chevauchant ou reliés entre eux par paires de deux éléments influençant l'écoulement (101B, 102B) se rencontrant en bout à bout.

9. Élément de mélange (1) selon l'une des revendications 6 à 8, **caractérisé en ce que** sur la face avant (10-1A, 10-2A) et/ou sur la face arrière (10-1B, 10-2B), entre deux segments de la partie centrale (10-1, 10-2), est disposée respectivement une entretoise transversale (101-1A ou 101-1B) orientée essentiellement perpendiculairement à l'axe longitudinal L.

10. Élément de mélange (1) selon l'une des revendications 1 à 9, **caractérisé en ce que** l'élément de mélange (1) comprend en outre une première partie latérale (11) ainsi qu'une deuxième partie latérale (12), disposée à distance de la première partie latérale (11), et **en ce que** la partie centrale (10) est reliée à la première partie latérale (11) et à la deuxième partie latérale (12) de façon à ce que la face avant (10A) et la face arrière (10B) soient orientées essentiellement perpendiculairement à la première partie latérale (11) et/ou à la deuxième partie latérale (12).

11. Élément de mélange (1) selon l'une des revendications 1 à 10, **caractérisé en ce que** l'élément de mélange (1) comprend en outre une partie de fond (13) avec au moins un orifice d'entrée, en particulier avec au moins deux orifices d'entrée, laquelle est orientée essentiellement perpendiculairement à la partie centrale (10) et/ou à la première partie latérale (11) ainsi qu'à la deuxième partie latérale (12).

12. Élément de mélange (1) selon l'une des revendications 1 à 11, **caractérisé en ce que** les enveloppes prismatiques sont formées sur la base d'un quadrilatère orthodiagonal.

13. Mélangeur statique (0), notamment mélangeur statique dentaire, permettant le mélange de composants de viscosité variable, comprenant un élément de mélange (1) selon l'une des revendications 1 à 12, le mélangeur statique (0) comprenant en outre une douille de mélangeur allongée (2) avec au moins un orifice de sortie (21) et un couvercle de mélangeur (3) fermant la douille du mélangeur (2), avec au moins deux orifices d'entrée (31, 32) pour l'introduction des composants à mélanger, **caractérisé en ce que** la douille du mélangeur (2) est destinée à recevoir l'élément de mélange (1) **en ce que** et les parois intérieures de la douille du mélangeur (2) ainsi que les au moins deux éléments influençant l'écoulement (101A, 102A, 101B, 102B) sur la face avant (10A) et/ou la face arrière (10B) de la partie centrale (10) forment au moins deux chambres de mélange (201A, 202A, 201B, 202B) reliées entre elles.

14. Mélangeur statique (0) selon la revendication 13, **caractérisé en ce que** respectivement au moins une chambre de mélange (201A, 202A) formée sur la face avant (10A) de la partie centrale (10) est en outre reliée respectivement à au moins une chambre de mélange (201B, 202B) formée sur la face arrière (10B) de la partie centrale (10).

15. Utilisation d'un élément de mélange (1) selon l'une des revendications 1 à 12 ou d'un mélangeur statique (0) selon la revendication 13 ou 14, pour le mélange d'au moins deux composants de viscosité variable, notamment au moins deux matériaux dentaires de viscosité variable.
